# EUROPÄISCHE PATENTSCHRIFT

(11) **EP 1 419 203 B1**
(45) Veröffentlichungstag und Bekanntmachung des Hinweises auf die Patenterteilung: **11.10.2006**
(21) Anmeldenummer: 02754993.0
(22) Anmeldetag: 13.08.2002
(51) Int. Cl.: C09D 5/00

(54) **OBERFLÄCHENFILM MIT DEPOTFUNKTION, DESSEN HERSTELLUNG UND VERWENDUNG**
SURFACE FILM WITH DEPOSITING FUNCTION, THE PRODUCTION AND USE THEREOF
COUCHE PROTECTRICE A FONCTION DE DEPOT, SON MODE DE PRODUCTION ET SON UTILISATION

(30) Priorität: 22.08.2001 DE 10141089
(43) Veröffentlichungstag der Anmeldung: 19.05.2004
(73) Patentinhaber: Henkel Kommanditgesellschaft auf Aktien, 40589 Düsseldorf (DE)
(72) Erfinder: SCHMIEDEL, Peter, 40599 Düsseldorf (DE); BECKER, Axel, 64319 Pfungstadt (DE); LOSSACK, Annett, 40599 Düsseldorf (DE); FERENCZ, Andreas, 40223 Düsseldorf (DE); SCHOLL, Elke, 47877 Willich (DE)
(86) Internationale Anmeldenummer: PCT/EP2002/009041
(87) Internationale Veröffentlichungsnummer: WO 2003/018694

(56) Entgegenhaltungen:
- EP-A- 1 046 667
- DE-A- 2 139 536
- GB-A- 762 272
- US-A- 4 842 763
- DATABASE WPI Section Ch, Week 199344 Derwent Publications Ltd., London, GB; Class A96, AN 1993-348512 XP002224086 & JP 05 255456 A (JAPAN SYNTHETIC RUBBER CO LTD), 5. Oktober 1993 (1993-10-05)
- DATABASE WPI Section Ch, Week 200065 Derwent Publications Ltd., London, GB; Class G02, AN 2000-667603 XP002224087 & JP 2000 265163 A (TOTO LTD), 26. September 2000 (2000-09-26) in der Anmeldung erwähnt

## Beschreibung

Die vorliegende Erfindung betrifft eine Zusammensetzung, mindestens enthaltend Wasser, ein poröses teilchenförmiges Polymeres oder ein Gemisch aus zwei oder mehr solcher Polymeren und mindestens eine wasserlösliche oder wasserdispergierbare hydrophile Verbindung mit einem Molekulargewicht von weniger als 1000 oder ein Gemisch aus zwei oder mehr davon.

Oberflächen von Gegenständen, Wände, Decken oder Böden von Räumen sowie im Freien befindliche mobile oder stationäre Gegenstände wie Autos, Baumaschinen, Verkehrsschilder, Gartenmöbel und dergleichen sind in Haushalt und Industrie einer Vielzahl von Anschmutzungen ausgesetzt. Die Reinigung der genannten Oberflächen im Hinblick auf solche Anschmutzungen ist häufig zeitraubend und schwierig. Um diese Aufgabe zu erleichtern wurden verschiedentlich im Stand der Technik Oberflächenbeschichtungen vorgeschlagen, die permanent auf den entsprechenden Oberflächen haften und eine Reinigung erleichtern sollen. Hierzu zählen beispielsweise Silikonbeschichtungen. Nachteilig wirkt sich bei diesen Beschichtungen jedoch aus, daß sie in der Regel nicht vom Anwender selbst aufgetragen werden können und darüber hinaus durch eine mit der Beschichtung verbundene Hydrophobierung der Oberfläche besonders im Hinblick auf Fettschmutz eine eher gegenteilige Wirkung zeigen.

Aus der JP-A 2000-265163 sind Gegenstände mit hydrophil ausgerüsteter Oberfläche bekannt, die auf ihrer äußeren Oberfläche ein Tensid oder eine hydrophile Substanz in Kombination mit einer fest aufgebrachten Substanz, die verzögert in Wasser abgegeben wird, bekannt. Die dort beschriebenen Gegenstände müssen jedoch eine fein aufgerauhte Oberflächenstruktur weisen um die beschriebene vorteilhafte Wirkung im Hinblick auf ein Beschlagen mit Wasserdampf zu verhindern. Darüber hinaus lassen sich mit den dort beschriebenen Beschichtungen nur geringfügig hydrophilierte Oberflächen erhalten, wie an dem Kontaktwinkel von 40° gegenüber Wasser zu erkennen ist.

Die aus dem Stand der Technik bekannte Lösung weist daher verschiedene Nachteile auf, die eine Anwendung der dort beschriebenen Technik erschweren. So muß beispielsweise ein mit den dort beschriebenen Beschichtungen zu versehender Gegenstand zunächst aufwendig mit einer aufgerauhten Oberfläche ausgestattet werden, um eine optimale Wirkung der Beschichtung zu erzielen. Dies verhindert jedoch, daß eine solche schützende Beschichtung vom Anwender grundsätzlich auf alle von ihm gewünschten Gegenstände auftragen kann. Der Anwender ist damit immer an einen Produkt gebunden, das im Hinblick auf eine aufgerauhte Oberfläche eine bestimmte Vorbehandlung aufweist. Weiterhin lassen sich selbst mit den dort beschriebenen Beschichtungen nur wenig hydrophilierte Oberflächen erhalten, die zudem im Hinblick auf eine gute Wirkung gegen Anschmutzungen, wie sie beispielsweise in Badezimmern in Duschkabinen oder ähnlichen Räumen, die häufig Wasserspritzern ausgesetzt sind, keinen ausreichenden Schutz bieten.

Der vorliegenden Erfindung lag damit die Aufgabe zugrunde, Zusammensetzungen und Verfahren zu deren Herstellung zur Verfügung zu stellen, welche die obengenannten, aus dem Stand der Technik bekannten Nachteile nicht aufweisen. Insbesondere lag der vorliegenden Erfindung die Aufgabe zugrunde, eine Zusammensetzung zur Verfügung zu stellen, welche sich vom Anwender einfach auf beliebige Oberflächen und Gegenstände auftragen läßt und dort ihre Wirkung entfaltet. Weiterhin lag der vorliegenden Erfindung die Aufgabe zugrunde, eine Zusammensetzung zur Verfügung zu stellen, die als im wesentlichen transparenter Film auf einer Oberfläche vorliegt und das äußere Erscheinungsbild der Oberfläche nicht oder nur unwesentlich verändert. Weiterhin lag der vorliegenden Erfindung die Aufgabe zugrunde, eine Zusammensetzung zur Verfügung zu stellen, welche semipermanent auf einer Oberfläche gebunden ist und mehr als einen Anschmutzungszyklus ohne wesentliche Einschränkung ihrer Wirksamkeit übersteht.

Die obengenannten Aufgaben werden durch eine Zusammensetzung gelöst, wie sie im Rahmen des nachfolgenden Textes beschrieben wird.

In der JP-A-5255456 (WPI Zusammenfassung 1993-348512) wird eine wäßrige Dispersion beschrieben, die 0,05 bis 2 Gew.-% poröse Polymerteilchen mit einer durchschnittlichen Teilchengröße von 0,1 bis 10 µm sowie Natriumlaurylsulfat enthält. Das verwendete Polymer ist vernetzt. Der pH-Wert der wässrigen Dispersion beträgt 2 bis 4.

Demgegenüber ist der Gegenstand der vorliegenden Erfindung eine Zusammensetzung, mindestens enthaltend Wasser, ein poröses teilchenförmiges Polymeres oder ein Gemisch aus zwei oder mehr solcher Polymeren und mindestens eine wasserlösliche oder wasserdispergierbare hydrophile Verbindung mit einem Molekulargewicht von weniger als 1000 oder ein Gemisch aus zwei oder mehr davon, wobei
- das Gewichtsverhältnis von Polymerem oder Polymeren zu hydrophiler Verbindung oder hydrophilen Verbindungen 1 : 10 bis 10 : 1 beträgt,
- die durchschnittliche Teilchengröße des Polymeren 1 nm bis 50 µm beträgt und
- das Polymere bei einer Temperatur von weniger als 40 °C bei einem pH-Wert von 5 bis 8 eine Wasserlöslichkeit von weniger als 2 g/l aufweist.

Unter einem "Polymeren" wird im Rahmen der vorliegenden Erfindung eine Verbindung verstanden, die eine Molekulargewicht von mehr als etwa 1000 aufweist und im Polymerrückgrat mindestens eine sich mindestens einmal wiederholende Struktureinheit aufweist.

Unter dem Begriff "porös" wird im Rahmen der vorliegenden Erfindung ein Zustand verstanden, bei dem ein Polymerteilchen keine im Hinblick auf seine Umgebung abgeschlossene und nicht durch in der Umgebung der Polymeren vorliegende Stoffe oder durch im Inneren des Polymerteilchens vorliegende Stoffe penetrierbare Hülle aufweist. Ein im Rahmen der vorliegenden Erfindung als "porös" bezeichnetes Polymerteilchen muß nicht grundsätzlich in einem porösen Zustand vorliegen, es muß jedoch mindestens eine Umgebung existieren, in welcher das Polymerteilchen im Sinne der vorstehenden Definition als "porös" bezeichnet werden kann. Im Rahmen einer bevorzugten Ausführungsform der vorliegenden Erfindung weist ein "poröses" Polymeres in wäßriger Umgebung, d. h., in einer wasserhaltigen Umgebung, Poren auf. Ein Polymeres wird beispielsweise dann im erfindungsgemäßen Sinn als "porös" bezeichnet, wenn es in einer entsprechenden, vorzugsweise wäßrigen Umgebung aufquillt, so daß das Innere des Polymerteilchens nach der Quellung zugänglich wird.

Der Begriff "teilchenförmig" bezieht sich im Rahmen der vorliegenden Erfindung auf den Zustand, in dem sich das in einer erfindungsgemäßen Zusammensetzung vorliegenden Polymere befindet. Unter einem "teilchenförmigen" Polymeren wird dabei ein Polymeres verstanden, das in Form diskreter Teilchen separiert dispers oder kolloiddispers in einer wäßrigen Umgebung vorliegt. Es ist dabei unerheblich, ob das Polymere im gewählten Lösemittel im Form seiner Primärteilchen oder als Teilchenagglomerate vorliegt. Unter "Primärteilchen" werden dabei Teilchen verstanden, die nur durch Auflösen des Polymeren in die einzelnen Polymermoleküle aufgetrennt werden können. Unter "Agglomeraten" werden hingegen mehr oder weniger lose aneinanderhaftende Primärteilchen verstanden, die durch geeignete Maßnahmen wie Ultraschallbehandlung und dergleichen in die Primärteilchen zerlegt werden können.

Ein teilchenförmiges Polymeres ist im Sinne der vorliegenden Erfindung zumindest auf mikroskopischer Eben fest, d.h., ein einzelnes Polymerteilchen ist nicht fließfähig. Dies schließt jedoch nicht aus, daß ein Ansammlung solcher Polymerteilchen wie sie beispielsweise in einem Polymerfilm auftreten können, bei Raumtemperatur gegebenenfalls eine geringe Fließfähigkeit aufweisen.

Ein "teilchenförmiges Polymeres" weist im Rahmen der vorliegenden Erfindung einen Durchmesser von weniger als etwa 100 µm, beispielsweise weniger als 50 µm, weniger als 30 µm oder weniger als 10 µm auf. Im Rahmen einer bevorzugten Ausführungsform der vorliegenden Erfindung weisen mindestens etwa 95% der erfindungsgemäßen einsetzbaren Polymerteilchen einen Durchmesser von weniger als etwa 30 µm, beispielsweise weniger als 10 µm oder weniger als 3 µm, auf. Die angegebenen Durchmesser beziehen sich dabei auf Meßwerte für Teilchendurchmesser, wie sie mittels üblicher Verfahren zur Bestimmung von Teilchendurchmessern erhältlich sind. Geeignete Meßverfahren sind beispielsweise Siebverfahren, Laserbeugung, Elektronenmikroskopie oder Sedimentationsverfahren. Dieser Definition steht nicht entgegen, daß sich zwei oder mehr Polymerteilchen unter Bildung eines Aggregats zusammengelagert haben. Entscheidend ist im vorliegenden Fall die Teilchengröße der einzelnen, am Aggregat teilnehmenden Partikeln. Unter dem "durchschnittlichen Teilchendurchmesser" wird im Rahmen des vorliegenden Textes der üblicherweise mit d50 oder x50 bezeichnete Werte verstanden, bei dem 50 % der Teilchen einen größeren als den angegebenen durchschnittlichen Teilchendurchmesser 50 % der Teilchen einen kleineren als den angegebenen durchschnittlichen Teilchendurchmesser aufweisen.

Als Polymere eignen sich im Rahmen der vorliegenden Erfindung grundsätzlich alle porösen, teilchenförmigen Polymeren, die in Wasser bei einer Temperatur von weniger als 40 °C bei einem pH-Wert von 5 bis 8, insbesondere etwa 5,5 bis etwa 7, eine Wasserlöslichkeit von weniger als 2 g/l aufweisen.

Vorzugsweise enthält eine erfindungsgemäße Zusammensetzung poröse, teilchenförmige Polymere, die in Wasser bei einer Temperatur von weniger als 40°C bei einem pH-Wert von 5 bis 7 eine Wasserlöslichkeit von weniger als 1 g/l, insbesondere weniger als etwa 0,5 oder etwa 0,1 g/l aufweisen.

Ein im Rahmen der vorliegenden Erfindung einsetzbares Polymeres kann dabei beispielsweise derart beschaffen sein, daß es von seiner grundsätzlichen chemischen Struktur her zwar wasserlöslich ist, aufgrund von Vernetzung jedoch an einer Auflösung gehindert wird. Es ist im Rahmen der vorliegenden Erfindung ebenso möglich Polymere einzusetzen, die zwar grundsätzlich wasserlöslich sind, jedoch beispielsweise bei einem pH-Wert der innerhalb des obengenannten Bereichs liegt, nicht löslich sind.

So können im Rahmen der vorliegenden Erfindung als Polymere beispielsweise natürliche oder synthetische Polymere eingesetzt werden, welche die obengenannten Bedingungen erfüllen.

Geeignet sind beispielsweise Polymere, die in wäßriger Umgebung Hydrogele bilden. Besonders geeignet sind dabei Polymere, die eine Vernetzung zeigen, beispielsweise einer kovalente Vernetzung oder eine Vernetzung aufgrund ionischer Wechselwirkungen.

Geeignete natürliche Polymere sind beispielsweise Polysaccharide wie Alginate, Guar, Xanthan, Carrageenan, Celluloseether wie Methylcellulose, Hydroxyethylcellulose, Ethylcellulose, Hydroxypropylcellulose, Hydroxypropylmethylcellulose oder Carboxymethylcellulose, Stärkederivate oder Proteine. Für die oben genannten natürlichen Polymeren gelten im Hinblick auf ihre Wasserlöslichkeit die bereits oben angegebenen Bedingungen. Wenn die genannten natürlichen Polymeren die Kriterien im Hinblick auf ihre Wasserlöslichkeit nicht erfüllen, so können sie beispielsweise durch geeignete Derivatisierung, insbesondere durch Vernetzung mit geeigneten Vernetzern, im Hinblick auf ihre Wasserlöslichkeit entsprechend eingestellt werden.

Geeignete synthetische Polymere sind beispielsweise Polyacrylate, Polymethacrylate, Polyacrylamide, Polymethacrylamide, Polyurethane, Polyester, Polyamide, Polyvinylpyrrolidone, Vinylpolymere wie Polyvinylacetat, Polyvinylalkohole sowie Copolymere aus zwei oder mehr der obengenannten Polymertypen.

Als Vernetzer eignen sich beispielsweise Formaldehyd, Epichlorhydrin, Glyoxal, Phosphoroxichlorid Kondensationsprodukte aus Formaldehyd und Harnstoff, Thioharnstoff, Guanidin, Melamin, Dimethylolharnstoff, Dimethylolethylenharnstoff, Diepoxide, Diimine, Diaziridine, Dicyclopropane, Dilactone, Dilactame, Diisocyanate, Diacetale, Diketene, Dialdehyde, Dicarbonäuren, Disäurechloride, Säureanhydride, Diorthoester, Dihalogenide, Divinylverbindungen, Divinylsulfone oder Dialkylsulfone oder Gemische aus zwei oder mehr davon.

Ein erfindungsgemäß geeignetes, poröses Polymerteilchen beinhaltet beispielsweise mindestens ein auf mindestens einem monoethylenisch ungesättigtem Monomeren mit einer Säuregruppe basierendes Polymeres. Die Säuregruppen des eingesetzten Monomeren können teilweise oder vollständig neutralisiert sein.

Geeignete monoethylenisch ungesättigte Monomere mit einer Säuregruppe sind Acrylsäure, Methacrylsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylsäure, Itaconsäure, Citraconsäure, Mesacronsäure, Glutaconsäure, Aconitsäure, Maleinsäure, Fumarsäure, Tricarboxyethylen und Maleinsäureanhydrid, hydroxyl- oder aminogruppenhaltige Ester der vorstehenden Säuren, vorzugsweise der Acryl- oder Methacrylsäure, wie z. B. 2-Hydroxyethylacrylat, N,N-Dimethylaminoethylacrylat sowie die analogen Derivate der Methacrylsäure, wobei Acrylsäure sowie Methacrylsäure besonders geeignet sind.

Zusätzlich zu den monoethylenisch ungesättigten Monomeren mit einer Säuregruppe kann ein im Rahmen der vorliegenden Erfindung zum Einsatz in einer erfindungsgemäßen Zusammensetzung geeignetes Polymerteilchen auch auf weiteren, von dem monoethylenisch ungesättigten Monomer mit einer Säuregruppe verschiedenen Comonomeren basieren. Als Comonomere geeignet sind beispielsweise ethylenisch ungesättigte Sulfonsäuremonomere, ethylenisch ungesättigte Phosphonsäuremonomere oder Acrylamide oder Gemische aus zwei oder mehr davon.

Ethylenisch ungesättigte Sulfonsäuremonomere sind beispielsweise aliphatische oder aromatische Vinylsulfonsäuren oder acrylische oder methacrylische Sulfonsäuren. Als aliphatische oder aromatische Vinylsulfonsäuren eignen sich beispielsweise Vinylsulfonsäure, Allylsulfonsäure, 4-Vinylbenzylsulfonsäure, Vinyltoluolsulfonsäure oder Stryrolsulfonsäure oder Gemische aus zwei oder mehr davon. Beispiele für geeignete Acryl- bzw. Methacrylsulfonsäuren sind Sulfoethylacrylat, Sulfoethylmethacrylat, Sulfopropylacrylat, Sulfopropylmethacrylat, 2-Hydroxy-3-methacryloxypropylsulfonsäure und 2-Acrylamid-2-methylpropansulfonsäure.

Beispiele für olefinisch ungesättigte Phosphonsäuremonomere sind Vinylphosphonsäure, Allylphosphonsäure, Vinylbenzylphosponsäure, Acrylamidoalkylphosphonsäuren, Acrylamidoalkyldiphosphonsäuren, phosponomethylierte Vinylamine oder (Meth)acrylphosphonsäurederivate.

Beispiele für Acrylamide sind alkylsubstituierte Acrylamide oder aminoalkylsubstituierte Derivate des Acrylamids oder des Methacrylamids, wie N-Vinylamide, N-Vinylformamide, N-Vinylacetamide, N- Vinyl-N-Methylacetamide, N-Vinyl-N-methylformamide, N-Methylol(meth)acrylamide, Vinylpyrrolidon, N,N-Dimethylpropylacrylamid, Dimethylacrylamid oder Diethylacrylamid oder die entsprechenden Methacrylamidderivate oder Acrylamid oder Methacrylamid oder Gemische aus zwei oder mehr davon.

Als Comonomere können auch Monomere mit einer geringen Löslichkeit in Wasser eingesetzt werden. Die Menge solcher Comonomeren sollte in einem Bereich von etwa 0,01 bis etwa 20, beispielsweise von etwa 0,1 bis etwa 15 oder etwa 0,5 bis etwa 5 Gew.-%, bezogen auf die insgesamt eingesetzten Monomere, liegen. Beispiele für derartige Monomere sind Acrylsäure- und Methacrylsäureester wie Ethylacrylat und Methacrylacrylat, Butylacrylat und Butylmethacrylat, Vinylacetat, Styrol oder Isobutylen oder Gemische aus zwei oder mehr davon.

Alle aufgeführten Säuren können bei der Herstellung der erfindungsgemäßen einsetzbaren, porösen Polymerteilchen als freie Säuren oder als Salze polymerisiert werden. Auch eine teilweise Neutralisation ist möglich. Ferner kann eine vollständige oder teilweise Neutralisation auch nach der Polymerisation erfolgt sein. Die Neutralisation der Monomeren kann mit Alkalimetallhydroxiden, Erdalkalimetallhydroxiden, Ammoniak sowie Carbonaten oder Bicarbonaten oder Gemischen aus zwei oder mehr davon erfolgt sein. Daneben ist grundsätzlich jede weitere Base geeignet, die mit der zu neutralisierenden Säure ein Salz bildet. Auch eine Mischneutralisation mit verschiedenen Basen ist möglich.

Aus den vorgenannten Monomeren läßt sich ein im Rahmen der vorliegenden Erfindung einsetzbares Polymerteilchen durch verschiedene Polymerisationsweisen herstellen. Beispielsweise sind in diesem Zusammenhang Lösungspolymerisation, Spraypolymerisation, Emulsionspolymerisation und Suspensionspolymerisation zu nennen.

Damit die so erhaltenen Polymeren die obengenannten Eigenschaften im Hinblick auf ihre Wasserlöslichkeit und ihre Teilchengröße erfüllen, können verschiedene, dem Fachmann bekannte Parameter bei der Polymerherstellung variiert werden. So können beispielsweise Copolymere im Hinblick auf ihre Monomerzusammensetzung derart eingestellt werden, daß ihre Wasserlöslichkeit innerhalb der obengenannten Grenzen liegt. Geeignete Monomerkombinationen sind dem Fachmann bekannt. Darüber hinaus kann beispielsweise die Teilchengröße der Polymerpartikel durch Beeinflussung der Polymerisationsparameter, bei der Emulsionspolymerisation beispielsweise Emulgatormenge oder -typ oder Rührgeschwindigkeit, eingestellt werden.

Eine weitere Möglichkeit zur Steuerung der Wasserlöslichkeit der erfindungsgemäßen einsetzbaren Polymerteilchen ist beispielsweise die Vernetzung. Ein im Rahmen der vorliegenden Erfindung einsetzbares Polymerteilchen kann beispielsweise durch einen chemischen Vernetzer oder durch thermische Vernetzung oder Strahlenvernetzung oder durch zwei oder mehr der genannten Verfahren vernetzt sein, wobei die Vernetzung durch einen chemischen Vernetzer bevorzugt ist.

Die chemische Vernetzung wird durch dem Fachmann allgemein bekannte Vernetzer erreicht. Derartige Vernetzer werden vorzugsweise in einer Menge von weniger als 7, bevorzugt 0,1 bis 5 Gew.-%, bezogen auf das Gesamtgewicht der eingesetzten Monomeren, bei der Herstellung der erfindungsgemäßen einsetzbaren Polymerteilchen eingesetzt. Erfindungsgemäß geeignete Vernetzer sind Polyacryl- oder Polymethacrylsäureester, die beispielsweise durch die Umsetzung eines Polyols oder ethoxlierten Polyols wie Ethylenglykol, Propylenglykol, Trimethylolpropan, 1,6-Hexandiolglycerin, Pentaerythrit, Polyethylenglykol oder Polypropylenglykol mit Acrylsäure oder Methacrylsäure gewonnen werden.

Als Vernetzer können auch Polyole, Aminoalkohole sowie deren mono(meth)acrylsäureester und Monoallylether eingesetzt werden. Weiterhin sind auch Acrylsäureester der Monoallylverbindungen der Polyole und Aminoalkohole als Vernetzer geeignet.

Eine andere Gruppe von geeigneten Vernetzern wird durch die Reaktion von Polyalkylenpolyaminen wie Diethylentriamin und Triethylentetraaminmethacrylsäure oder Methacrylsäure gewonnen.

Als Vernetzer sind beispielsweise 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, ethoxyliertes Bisphenol-A-diacrylat, ethoxyliertes Bisphenol-A-dimethacrylat, Ethylenglykoldimethacrylat, 1,6-Hexandioldiacrylat, 1,6-Hexandioldimethacrylat, Neopentylglykoldimethacrylat, Polyethylenglykoldiacrylat, Polyethylenglykoldimethacrylat, Triethylenglykoldiacrylat, Triethylenglykoldimethacrylat, Tripropylenglykoldiacrylat, Tetraethylenglykoldiacrylat, Tetraethylenglykoldiacrylat, Tetraethylenglykoldimethacrylat, Dipentaerythritpentaacrylat, Pentaerythrittetraacrylat, Pentaerythrittriacrylat, Trimethylolpropantriacrylat, Trimethyloltrimethacrylat, Tris(2-hydroxyethyl)isocyanurattriacrylat, Tris(2-hydroxy)isocyanurattrimethacrylat, Divinylester von Polycarbonsäuren, Diallylester von Polycarbonsäuren, Triallylterephthalat, Diallylmaleat, Diallylfumarat, Hexamethylenbismaleinimid, Trivinyltrimellithat, Divinyladipat, Diallylsuccinat, ein Ethylenglykoldivinylether, Cyclopentadiendiacrylat, Triallylamin, Tetraallylammoniumhalide, Divinylbenzol, Divinylether, N,N'-Methylenbisacrylamid, N,N'-Methylenbismethacrylamid, Ethylenglykoldimethacrylat oder Trimethylolpropantriacrylat oder Gemische aus zwei oder mehr davon geeignet. Besonders geeignete Vernetzer sind beispielsweise N,N'-Methylenbisacrylamid, N,N'-Methylenbismethacrylamid Polyethylenglykoldiacrylat, Polyethylenglykoldimethacrylat oder Triallylamin oder Gemische aus zwei oder mehr der genannten Verbindungen.

Erfindungsgemäß einsetzbare Polymerteilchen können beispielsweise auch nachvernetzt sein. Als sogenannte "Nachvernetzer" geeignet sind organische Carbonate, polyquaternäre Amine, polyvalente Metallverbindungen und Verbindungen, die mindestens zwei funktionelle Gruppen aufweisen, die mit Carboxylgruppen eines unbehandelten Polymerteilchens reagieren können. Hierbei handelt es sich insbesondere um Polyole und Aminoalkohole wie Ethylenglykol, Diethylenglykol, Triethylenglykol, Tetraethylenglykol, Polyethylenglykol, Glycerin, Polyglycerin, Propylenglykol, Ethanolamin, Diethanolamin, Triethanolamin, Propanolamin, Polyoxypropylen, Oxyethylen-Oxypropylen-Blockpolymere, Sorbitanfettsäureester, Polyoxyethylensorbitanfettsäureester, Trimethylolpropanpentaerythrit, Polyvinylalkohol und -sorbitol, Polyglycidyletherverbindungen, wie Ethylenglykoldiglycidylether, Polyethylenglykoldiglycidylether, Glycerindiglycidylether, Glycerolpolyglycidylether, Pentaerythritpolyglycidylether, Propylenglycoldiglycidylether und Polypropylenglycoldiglycidylether, Polyacridin-Verbindungen, wie 2,2-Bishydroxymethylbuntanol-tris[3-(1-acridinyl) propionat], 1,6-Hexamethylendiethylen-Harnstoff und Diphenylmethan-bis-4,4'-N,N'-diethylen-harnstoff, Haloepoxyverbindungen wie Ethylendiamin, Diethylentriamin, Triethylentetramin, Tetraethylenpentamin, Pentaethylenhexamin und Polyethylenimine, Polyisocyanate wie 2,4-Toluylen-diisocyanat und Hexamethylendiisocyanat, Zinkhydroxide, Kalzium-, Aluminium-, Eisen-, Titan- und Zirkonhalogenide, Alkylencarbonate wie 1,3-Dioxalon-2-on und 4-Methyl-1,3-dioxolan-2-on, polyvalente Metallverbindungen wie Salze, polyquaternäre Amine wie Kondensationsprodukte von Dimethylaminen und Epichlorhydrin, Homo- und Copolymere von Diallyldimethylamoniumchlorid und Homo- und Copolymere von Diethylallylamino(meth)acrylatmethylchloridammoniumsalzen. Unter diesen Verbindungen sind beispielsweise Diethylenglykol, Triethylenglykol, Polyethylenglykol, Glyzerin, Polyglyzerin, Propylenglykol, Diethanolamin, Triethanolamin, Polyoxypropylen, Oxyethylenoxypropylen Blockcopolymer, Sorbitanfettsäureester, Polyoxyethylensorbitanfettsäureester, Trimethylolpropan, Pentaerythrit, Polyvinylalkohol, Sorbitol, Alkylencarbonate wie 1,3-Dioxolan-2-on, 1,3-Dioxolan-2-on, 4-Methyl-1,3-dioxolan-2-on, on, 4,5-Dimethyl-1,3-dioxolan-2-on, 4,4-Dimethyl 1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxopan-2-on, Poly-1,3-dioxolan-2-on oder Ethylenglykoldiglycidylether oder Gemische aus zwei oder mehr davon besonders geeignet.

Die Nachvernetzer werden bei der Herstellung der erfindungsgemäßen einsetzbaren Polymerteilchen beispielsweise in einer Menge von etwa 0,01 bis etwa 30 oder etwa 0,1 bis etwa 20 oder etwa 0,5 bis etwa 10 Gew.-%, bezogen auf das unbehandelte Polymerteilchen, eingesetzt.

Eine weitere Möglichkeit zur Herstellung der erfindungsgemäßen einsetzbaren Polymerteilchen die spontane Teilchenbildung beim Ausfällen von Polymeren aus einer Lösung. So eignen sich beispielsweise Acrylcopolymere mit quaternären Ammoniumgruppen wie sie als Eudragit® RS oder Eudragit® RL im Handel erhältlich sind (Hersteller: Fa. Röhm GmbH, Darmstadt, Deutschland) der Herstellung von entsprechenden Polymerteilchen.

Dazu werden die entsprechenden Acrylcopolymere in Gegenwart der hydrophilen Substanz in einem organischen, wassermischbaren Lösemittel gelöst und anschließend in eine zur Fällung ausreichende Menge Wasser, beispielsweise die mindestens doppelte Menge Wasser, eingetragen. Als organische, wassermischbare Lösemittel eignen sich insbesondere Aceton, Isopropanol oder Ethanol. Nach diesem Verfahren entstehen Polymerpartikel, deren Durchmesser zwischen etwa 50 und etwa 500 nm liegt. Ein entsprechendes Verfahren wird beispielsweise von R. Bodmeyer et al. in J. Microencapsulation, 1991, Vol. 8, No.2, 161 - 170 beschrieben, wobei auf die Offenbarung dieser Literaturstelle ausdrücklich hingewiesen wird und die Offenbarung des zitierten Textes als Bestandteil der Offenbarung des vorliegenden Textes betrachtet wird.

Ebenfalls zum Einsatz als Polymerteilchen im Rahmen der erfindungsgemäßen Zusammensetzung geeignet sind Polyurethane.

Die erfindungsgemäß einsetzbaren teilchenförmigen Polyurethane sind beispielsweise erhältlich durch Umsetzung von
a) Polyisocyanaten mit
b1) Polyolen mit einem Molekulargewicht von 500 oder mehr oder
b2) Polyolen mit einem Molekulargewicht von weniger als 500 oder Gemischen von b1) und b2) und
c) gegebenenfalls Verbindungen mit mindestens einer gegenüber Isocyanaten reaktionsfähigen Gruppe und mindestens einer durch Basen- oder Säurezugabe ionisierbaren Gruppe.

Als Komponente a) zur Herstellung der erfindungsgemäßen Polyurethane kommen die üblicherweise in der Polyurethanchemie eingesetzten Polyisocyanate in Betracht.

Insbesondere zu nennen sind die Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,3,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanatodiphenylmethan, Tetramethylxylylendiisocyanat (TMXDI), 2,4'-Diisocyanatodiphenylmethan, p-Xylylendiisocyanat, die Isomeren des Bis-(4-Isocyanatocyclohexyl)methans, wie das trans/trans-, das cis/cis- und cis/trans-Isomere sowie aus diesen Verbindungen bestehende Gemische.

Als Gemische dieser Isocyanate sind besonders die Gemische der jeweiligen Strukturisomeren von Diisocyanatotoluol und Diisocyanatodiphenylmethan von Bedeutung, insbesondere ist ein Gemisch aus etwa 80 mol-% 2,4-Diisocyanatotoluol und etwa 20 mol-% 2,6-Diisocyanatotoluol geeignet. Gegebenenfalls können die aromatischen Diisocyanate mit aliphatischen Diisocyanaten abgemischt sein.

Um Polyurethane mit einem geeigneten Verzweigungs- oder Vernetzungsgrad herzustellen, können z.B. drei- und/oder vierwertige Isocyanate eingesetzt werden. Derartige Isocyanate lassen sich beispielsweise erhalten, indem man zweiwertige Isocyanate derart miteinander umsetzt, daß ein Teil ihrer Isocyanatgruppen zu Allophanat-, Biuret- oder Isocyanuratgruppen derivatisiert wird.

Handelsübliche Verbindungen sind beispielsweise das Isocyanurat oder das Biuret des Hexamethylendiisocyanats.

Weitere geeignete, höherfunktionelle Polyisocyanate sind z.B. Urethangruppen aufweisende Polyisocyanate, die durch Umsetzung eines Überschusses von beispielsweise 2,4- und/oder 2,6-Diisocyanatotoluol, IPDI oder Tetramethylendiisocyanat einerseits und niedermolekularen Polyhydroxyverbindungen wie Trimethylolpropan andererseits erhältlich sind.

Als Komponente b1) kommen beispielsweise höhermolekulare Polyole in Betracht, die ein Molekulargewicht von mehr als 500, beispielsweise etwa 500 bis 5.000 oder etwa 1.000 bis etwa 3.000 g/mol aufweisen.

Als Polyole der Komponente b1) eignen sich beispielsweise Polyesterpolyole wie sie aus Ullmanns Enzyklopädie der technischen Chemie, 4. Auflage, Band 19, S. 62-65, bekannt sind. Beispielsweise können Polyesterpolyole eingesetzt werden, die durch Umsetzung von zweiwertigen Alkoholen mit mehrwertigen, bevorzugt zweiwertigen Polycarbonsäuren erhältlich sind. Die Polycarbonsäuren (Komponente b1.1)) können aliphatisch, cycloaliphatisch, araliphatisch, aromatisch oder heterocyclisch sein und gegebenenfalls z.B. durch Halogenatome substituiert und/oder ungesättigt sein. Als Beispiele hierfür seien genannt Korksäure, Azelainsäure, Phthalsäure, Isophthalsäure, Terephthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure und/oder dimere Fettsäuren. Die genannten Polycarbonsäuren können entweder einzeln als ausschließliche Säurekomponente oder im Gemisch untereinander zum Aufbau der Komponente b1) eingesetzt werden. Bevorzugt sind die Carbonsäuren der allgemeinen Formel HOOC-(CH₂)_{y}-COOH, wobei y eine Zahl von 1 bis 20, bevorzugt eine Zahl von 2 bis 20 ist, z.B. Bernsteinsäure, Adipinsäure, Dodecandicarbonsäure und Sebacinsäure. Anstelle der freien Polycarbonsäuren können als Komponente b1.1), wenn möglich, auch die entsprechenden Polycarbonsäureanhydride oder die entsprechenden Polycarbonsäureester von niederen Alkoholen - oder deren Gemische - zur Herstellung entsprechender Polyesterpolyole verwendet werden.

Als mehrwertige Alkohole zur Reaktion mit der Polycarbonsäurekomponente zum Aufbau der Komponente b1) kommen als Komponente b1.2) beispielsweise Ethylenglycol, Propandiol-1,2, Propandiol-1,3, Butandiol-1,4, Butendiol-1,4, Butindiol-1,4, Pentandiol-1,5, Hexandiol-1,6, Neopentylglycol, Bis-(hydroxymethyl)cyclohexane, wie 1,4-Bis(hydroxymethyl)cyclohexan, 2-Methyl-propan-1,3-diol, Methylpentandiole, ferner Diethylenglykol, Triethylenglykol, Tetraethylenglykol, Polyethylenglycol, Dipropylenglykol, Polypropylenglykole, Dibutylenglykol und Polybutylenglykol in Betracht. Bevorzugt sind Neopentylglycol und Alkohole der allgemeinen Formel HO-(CH₂)ₓ-OH, wobei x eine Zahl von 1 bis 20, bevorzugt eine Zahl von 2 bis 20 ist. Beispiele hierfür sind Ethylenglycol, Butandiol-1,4, Hexandiol-1,6, Octandiol-1,8 und Dodecandiol-1,12.

Ferner kommen als Komponente b1) auch Polycarbonatdiole, wie sie z.B. durch Umsetzung von Phosgen mit einem Überschuß von den als Aufbaukomponenten für die Polyesterpolyole genannten niedermolekularen Alkohole b1.2) erhalten werden können, in Betracht.

Geeignet sind als Komponente b1) auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Es kommen bevorzugt solche Lactone in Betracht, die sich von Verbindungen der allgemeine Formel HO-(CH₂)_{z}-COOH ableiten, wobei z eine Zahl von 1 bis 20, vorzugsweise von 2 bis 20 ist. Beispiele sind ε-Caprolacton, β-Propiolacton, γ-Butyrolacton oder Methyl-ε-caprolacton sowie Gemische aus zwei oder mehr davon. Geeignete Starterkomponenten sind z.B. die vorstehend als Komponente b1.2) für die Polyesterpolyole genannten niedermolekularen zweiwertigen Alkohole. Die entsprechenden Polymerisate des ε-Caprolactons sind besonders bevorzugt. Auch niedermolekulare Polyesterpolyole oder Polyetherdiole können als Starter zur Herstellung der Lactonpolymerisate eingesetzt werden. Anstelle der Lactonpolymerisate können auch die entsprechenden, chemisch äquivalenten Polykondensate der den Lactonen entsprechenden Hydroxycarbonsäuren eingesetzt werden.

Daneben kommen als Komponente b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃, oder durch Anlagerung dieser Verbindungen gegebenenfalls im Gemisch oder nacheinander an Startkomponenten mit reaktionsfähigen Wasserstoffatomen wie Wasser oder Alkohole, z.B. Ethylenglycol, Propandiol-1,2, Propandiol-1,3, 2,2-Bis-(4-hydroxydiphenyl)-propan erhältlich.

Bei Verwendung geeigneter Polyether mit Polyethyleneinheiten mit einem Molekulargewicht von wenigstens etwa 150, bevorzugt wenigstens etwa 200, zur Herstellung der Polyurethane lassen sich in Wasser wenigstens weitgehend selbstdispergierbare Polyurethanteilchen herstellen, die ohne Verwendung weiterer hydrophiler Struktureinheiten im Polyurethan auskommen.

Sowohl zur Herstellung der Polyesterpolyole als auch zur Herstellung der Polyetherpolyole können Alkohole mit einer Funktionalität von mehr als zwei in untergeordneten Mengen als Komponente b1.3) eingesetzt werden. Insbesondere sind dies Verbindungen wie beispielsweise Trimethylolpropan, Pentaerythrit, Glycerin, Zucker, wie beispielsweise Glucose oder oligomerisierte Polyole, wie beispielsweise di- oder trimere Ether von Trimethylolpropan, Glycerin oder Pentaerythrit. Gegebenenfalls können die Hydroxylgruppen der Polyole durch Umsetzung mit Alkylenoxiden verethert sein. Die vorstehenden Verbindungen sind ebenfalls als Starterkomponente zum Aufbau der Polyetherpolyole geeignet.

Ebenfalls als Komponente b1) geeignet sind Polyhydroxyolefine, beispielsweise solche mit zwei endständigen Hydroxylgruppen, z.B. α,ω-Dihydroxypolybutadien, α,ω-Dihydroxypolymethacrylester oder α,ω-Dihydroxypolyacrylester.

Die als Komponente b1) einsetzbar aufgezählten Polyole können auch als Gemische in beliebigen Verhältnissen eingesetzt werden.

Als Polyole b2) können neben den Polyolen b1) noch niedermolekulare Di- oder Polyole, vorzugsweise Diole, mit einem Molekulargewicht von weniger als 500, vorzugsweise 62 bis 499 und besonders bevorzugt 62 bis 200 g/mol eingesetzt werden.

Als Komponente b2) werden vor allem die als Komponente b1.2) bezeichneten kurzkettigen Alkandiole eingesetzt, wobei Neopentylglycol und die unverzweigten Diole mit 2 bis 12 C-Atomen, wie beispielsweise Ethylenglycol, Propandiol-1,3, Butandiol-1,4, Pentandiol-1,5 oder Hexandiol-1,6 bevorzugt werden. Gegebenenfalls kann die Komponente b2) zur Erzeugung von Vernetzungsstellen in untergeordneten Mengen auch höherfunktionelle Alkohole, wie sie beispielsweise als Komponente b1.3) beschrieben sind, beinhalten.

Die zum Aufbau der erfindungsgemäßen Polyurethane beschriebenen Komponenten b1) und b2) können auch als Gemische von b1) und b2) im Sinne der Erfindung eingesetzt werden.

Um eine Wasserdispergierbarkeit der Polyurethane zu erreichen, werden in die Polyurethane in der Regel hydrophilierende, nicht-ionische oder anionische bzw. in anionische Gruppen umwandelbare Struktureinheiten eingebaut.

Unter "in anionische Gruppen umwandelbare Struktureinheiten" werden im Sinne der vorliegenden Erfindung solche Struktureinheiten verstanden, die durch eine einfache chemische Reaktion, wie beispielsweise Basenzugabe, in eine ionische Form umgewandelt werden können. Beispiele hierfür sind Säuregruppen.

Der Begriff "in Wasser im wesentlichen selbst dispergierbares Polyurethan" umfaßt im erfindungsgemäßen Sinne Polyurethane, die durch Zusatz lediglich geringer Mengen oder sogar ganz ohne Zusatz von Dispergierhilfen teilchenförmig in Wasser dispergierbar sind. Werden im Rahmen der Erfindung solche Polyurethanteilchen eingesetzt, so erfordern sie höchstens einen Zusatz von Dispergierhilfen, beispielsweise von Tensiden, in einer Größenordnung von etwa 5 Gew.-%, bevorzugt weniger als 3 Gew.-% und insbesondere bevorzugt weniger als 1 Gew.-%, bezogen auf die Trockenmasse der Dispersion und insbesondere bezogen auf die Masse der Polymerteilchen in der Dispersion.

Neben den Komponenten a) sowie b1) und/oder b2) können bei der Herstellung der erfindungsgemäß einsetzbaren Polyurethanen Teilchen als Komponente c) Verbindungen mit mindestens einer gegenüber Isocyanaten reaktionsfähigen Gruppe und mindestens einer durch Säurezugabe oder ionisierbaren Gruppe oder einer schon durch eine solche Reaktion ionisierte Gruppe eingebaut werden. Im folgenden Text wird der Begriff "anionische Gruppen" sowohl für die durch Basenzugabe ionisierten Gruppen als auch für die freien Säuren synonym gebraucht, insofern keine anderslautenden Angaben gemacht sind.

Der Anteil der Komponenten mit anionischen Gruppen an der Gesamtmenge der Komponenten a), b1), b2) und c), sofern sie zur Herstellung der Polyurethanteilchen benutzt werden, wird im allgemeinen so bemessen, daß die Molmenge der anionischen Gruppen, bezogen auf die Gewichtsmenge aller eingesetzten Komponenten, 0 bis 1.000, beispielsweise 0 bis 600 oder 0 bis 500 mmol/kg beträgt.

Als Komponente c) werden vor allem anionische Gruppen tragende Verbindungen, wie Sulfonat-, Carboxylat- und Phosphonatgruppen tragende Verbindungen, in das Polyurethan eingebaut. Die anionischen Gruppen werden beispielsweise in Form der freien Säure oder aber in Form ihrer Alkalimetall- oder Ammoniumsalze eingebaut, wobei als Gegenionen kationische Gruppen, wie Ammoniumgruppen, insbesondere protonierte tertiäre Aminogruppen oder quartäre Ammoniumgruppen, besonders geeignet sind.

Potentielle anionische hydrophile Gruppen sind vor allem solche, die sich durch einfache Neutralisations- oder Hydrolysereaktionen in die oben genannten anionischen hydrophilen Gruppen überführen lassen, also z.B. Carbonsäuregruppen oder Anhydridgruppen.

Als Monomere mit anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe tragen. Bevorzugt sind die Hydroxyalkylcarbonsäuren, vor allem diejenigen mit 3 bis 10 Kohlenstoffatomen, wie sie auch in der US-A 3,412,054 beschrieben sind. Besonders bevorzugt ist die Dimethylolpropionsäure (DMPA).

Weiterhin eignen sich als Komponente c) entsprechende Dihydroxysulfonsäuren und Dihydroxyphosphonsäuren.

Zur Neutralisation werden die gegebenenfalls im erfindungsgemäß einsetzbaren Polyurethanteilchen enthaltenen Säuregruppen vor oder bevorzugt nach dem Einbau in die Polyurethankette mit einem basischen Neutralisationsmittel neutralisiert. Als basische Neutralisationsmittel sind in der Regel beispielsweise die Alkalimetalle wie Li, Na oder K sowie die Erdalkalimetalle wie Ca, Mg, Ba oder Sr geeignet, obwohl sie im Rahmen der vorliegenden Erfindung nicht bevorzugt sind. Besser geeignet und im Rahmen der vorliegenden Erfindung bevorzugt sind alle Salze der o.g. Metalle, die in der Lage sind unter Neutralisation der Säuregruppen zu reagieren, insbesondere die Carbonate, die Hydrogencarbonate oder besonders bevorzugt die Hydroxide wie beispielsweise LiOH, NaOH, KOH oder Ca(OH)₂.

Ebenso zur Neutralisation geeignet und im Rahmen der vorliegenden Erfindung besonders bevorzugt sind organische, stickstoffhaltige Basen wie beispielsweise Ammoniak und Amine, wie Trimethylamin, Triethylamin, Tributylamin, Dimethylanilin, Dimethylethanolamin, Methyldiethanolamin oder Triethanolamin sowie deren Gemische. Die Neutralisation mit den stickstoffhaltigen, organischen Basen kann in organischer oder in wäßriger Phase erfolgen.

Wenn im erfindungsgemäß einsetzbaren Polyurethanteilchen ionisierbare Gruppen enthalten sind, die sich durch Basenzugabe zu anionischen Gruppen umwandeln lassen, so kann das Neutralisationsmittel in einer solchen Menge zugesetzt werden, daß ein ausreichender Anteil der ionisierbaren Gruppen, in der Regel etwa 0,1 bis 100%, neutralisiert wird. In der Regel findet eine Neutralisation zu mindestens 10%, bevorzugt zu mindestens 25% und insbesondere bevorzugt zu mindestens 50% statt. Es ist jedoch ebenfalls möglich, die im erfindungsgemäßen Polyurethan enthaltenen ionisierbaren Gruppen zu wenigstens 75% oder beispielsweise auch weitgehend vollständig, d.h. zu etwa 100%, zu neutralisieren.

Die Polyurethanteilchen können durch gleichzeitige Umsetzung aller Ausgangsverbindungen hergestellt werden. In vielen Fällen ist es jedoch zweckmäßig, das Polyurethanteilchen stufenweise herzustellen. So ist es z.B. möglich, aus den Komponenten A) und B) ein isocyanatgruppenhaltiges Präpolymeres herzustellen, das dann gegebenenfalls mit Komponente c) weiter umgesetzt wird.

Die Umsetzung der Komponenten a) bis c) kann auch in Gegenwart von Katalysatoren durchgeführt werden. Insbesondere sind tertiäre Amine geeignet, z.B. Triethylamin, 1,4- Diazabicyclo[2,2,2]octan (= DABCO) Dimethylbenzylamin, Bisdimethylaminoethylether und Bis-Methylaminomethylphenol. Besonders geeignet sind 1-Methylimidazol, 2-Methyl-1-vinylimidazol, 1-Allylimidazol, 1-Phenylimidazol, 1, 2,4,5-Tetramethylimidazol, 1-(3-Aminopropyl)imidazol, Pyrimidazol, 4-Dimethylaminopyridin, 4-Pyrrolidinopyridin, 4-Morpholino-pyridin, 4-Methylpyridin.

Es können auch zinnorganische Verbindungen als Katalysatoren eingesetzt werden. Darunter werden Verbindungen verstanden, die sowohl Zinn als auch einen organischen Rest enthalten, insbesondere Verbindungen, die eine oder mehrere Sn-C-Bindungen enthalten. Zu den zinnorganischen Verbindungen im weiteren Sinne zählen z.B. Salze wie Zinnoctoat und Zinnstearat. Zu den Zinnverbindungen im engeren Sinne gehören vor allem Verbindungen des vierwertigen Zinns der allgemeinen Formel RSₙX₃₋₁₁ wobei n für eine Zahl von 0 bis 2 steht, R für eine Alkylgruppe oder eine Arylgruppe oder beides steht und X schließlich für eine Sauerstoff-, Schwefel- oder Stickstoff-Verbindung oder ein Gemisch aus zwei oder mehr davon steht. Zweckmäßigerweise enthält R mindestens 4 C-Atome, insbesondere mindestens 8. Die Obergrenze liegt in der Regel bei 12 C- Atomen.

Vorzugsweise ist X eine Sauerstoffverbindung, also ein zinnorganische Oxid, Hydroxid, Carboxylat oder ein Ester einer anorganischen Säure. X kann aber auch eine Schwefelverbindung sein, also ein zinnorganisches Sulfid, Thiolat oder ein Thiosäureester. Bei den Sn-S-Verbindungen sind vor allem Thioglykolsäureester geeignet, z.B. Verbindungen mit folgenden Resten: -S-CH₂-CH₂-CO-O-(CH₂)-CH₃ oder -S-CH₂-CH₂-CO-O-CH₂-CH(C₂H₅)-CH₂-CH₂-CH₂-CH₃.

Derartige Verbindungen erfüllen eine weitere Auswahlregel: Das Molekulargewicht der zinnorganischen Verbindung soll in einer bevorzugten Ausführungsform der Erfindung bei mehr als 250, insbesondere bei mehr als 600 liegen.

Eine weitere bevorzugte Verbindungsklasse stellen die Dialkylzinn-(IV)-Carboxylate dar (X=0-CO-R'). Die Carbonsäuren haben 2, vorzugsweise wenigstens 10, insbesondere 14 bis 32 C-Atome. Es können auch Dicarbonsäuren eingesetzt werden. Als Säuren sind beispielsweise Adipinsäure, Maleinsäure, Fumarsäure, Terephthalsäure, Phenylessigsäure, Benzoesäure, Essigsäure, Propionsäure sowie insbesondere Capryl-, Caprin-, Laurin-, Myristin-, Palmitin- und Stearinsäure geeignet. Besonders geeignet sind beispielsweise Dibutylzinndiacetat und -dilaurat sowie Dioctylzinndiacetat und -dilaurat.

Auch Zinnoxide und -sulfide sowie -thiolate sind im Rahmen der vorliegenden Erfindung geeignet. Konkrete Verbindungen sind: Bis(tributylzinn)oxid, Dibutylzinndidodecylthiolat, Dioctylzinndioctylthiolat, Dibutylzinn- bis(thioglykolsäure-2-ethyl-hexylester), Octylzinn-tris-(thioglykolsäure-2-ethyl-hexylester), Dioctylzinn- bis(thioethylenglykol-2-ethylhexoat), Dibutylzinn- bis(thioethylenglykollaurat), Dibutylzinnsulfid, Dioctylzinnsulfid, Bis(tributylzinn)sulfid, Dibutylzinn-bis(thioglykolsäure-2-ethylhexylester), Dioctylzinn-bis(thioethylenglykol-2-ethylhexoat), Trioctylzinnthioethylenglykol-2-ethylhexoat sowie Dioctylzinn- bis(thiolatoessigsäure-2-ethylyhexylester), Bis(S,S-methoxycarbonylethyl)zinn-bis(thiolatoessigsäure-2-ethylhexylester), Bis(S,S-acetyl-ethyl)zinn-bis(thiolatoessigsäure-2-ethyl-hexylester), Zinn(11)octylhiolat und Zinn(11)- thioethylenglykol-2-ethylhexoat.

Außerdem seien noch genannt: Dibutylzinndiethylat, Dihexylzinndihexylat, Dibutylzinndiacetylacetonat, Dibutylzinndiethylacetylacetat, Bis(butyldichlorzinn)oxid, Bis(dibutylchlorzinn)sulfid, Zinn(11)phenolat, Zinn(11)- acetylacetonat, sowie weitere β-Dicarbonylverbindungen wie Acetylaceton, Dibenzoylmethan, Benzoylaceton, Acetessigsäureethylester, Acetessigsäure-n-propylester, Diphenylacetessigsäureethylester und Dehydroacetessigsäure.

Der Katalysator wird vorzugsweise dem Polyol zugesetzt. Seine Menge richtet sich nach seiner Aktivität und den Reaktionsbedingungen. Sie liegt vorzugsweise im Bereich von 0,001 bis 0,5 Gew.-%, bezogen auf das Polyol.

Vorzugsweise wird jedoch ohne Katalysator gearbeitet. Auch das Lösemittel wird zweckmäßigerweise weggelassen. Unter "Lösemitteln" werden im Rahmen des vorliegenden Textes inerte organische flüssige Stoffe mit einem Siedepunkt von weniger als 200 °C bei Normaldruck ( 1 bar) verstanden.

Die Umsetzung wird vorzugsweise so vorgenommen, daß das Verhältnis von OH-Gruppen in der Polyolkomponente zu NCO-Gruppen im Polyisocyanat etwa 1,0 bis etwa 2,0, insbesondere etwa 1,05 bis 1,8, beispielsweise etwa 1,1 bis 1, 7 oder etwa 1,3 bis 1,6, beträgt.

Eine Möglichkeit zur Einführung von ionenbildenden Strukturelementen ist die Reaktion von OH-terminierten Polyurethanoligomeren mit Dicarbonsäureanhydriden. Diese können insgesamt 2 bis 44, vorzugsweise 2 bis 12 C- Atome zwischen den Bisacylgruppen wie Alkylen-, Alkenylen- oder Arylen- Gruppierung enthalten. Beispielsweise sind Bernsteinsäureanhydrid, Glutarsäureanhydrid, 1,2,3,6-Tetrahydrophthalsäureanhydrid und dessen Isomere, Phthalsäureanhydrid, Trimellithsäureanhydrid, 7-Oxabicyclo[2,2,1]hept-5-en-2,3-dicarbonsäureanhydrid, 5-Norbornen-2,3-dicarbonsäureanhydrid und deren Isomere, Diglykolsäureanhydrid, Maleinsäureanhydrid, Dimethylmaleinsäureanhydrid, Ctraconsäureanhydrid, Itaconsäureanhydrid, Alkenylbernsteinsäureanhydride, vorzugsweise solche deren Alkenylgruppen mehr als 2 C-Atome, insbesondere mehr als 5, besonders bevorzugt mehr als 7 C-Atome besitzen, geeignet. Konkret genannt seien: n-Octenylbernsteinsäureanhydrid, n-Dodecenylbernsteinsäureanhydrid, Tetra-propenylbernsteinsäureanhydrid, n-Hexadecenylbernsteinsäureanhydrid und n-Octadenylbernsteinsäureanhydrid. Der Alkenylrest kann linear oder verzweigt aufgebaut sein. Darüber hinaus können auch Mischungen von Alkenylgruppen mit verschiedener Anzahl von C-Atomen vorkommen. Auch Gemische mehrerer Anhydride sind möglich, bevorzugt sind jedoch cyclische Anhydride.

Es ist jedoch auch möglich, einen molaren Überschuß an Isocyanaten einzusetzen, wobei NCO-terminierte Oligomere entstehen.

Im allgemeinen sind zwar NCO-Gruppen im Endprodukt unerwünscht. Sie können jedoch verwendet werden, um z.B. hydrophobe oder ionische Strukturelemente einzuführen.

Hydrophobe Strukturelemente können beispielsweise durch Reaktion von NCOterminierten Oligomeren mit Monoolen oder monofunktionellen Aminen mit 2 bis 22 C- Atomen, insbesondere mehr als 6, mehr als 10 oder mehr als 16 C-Atomen erhalten werden. Konkret seien genannt: Poly-Ethylen/Butylen mit 1 OH-Gruppe, z.B. mit einem OH- Äquivalentgewicht von 3600 (Kraton L 1203) sowie 1-Hexanol, 1-Heptanol, 1- Octanol, 1-Nonanol, 1-Decanol, 1-Undecanol, 10-Undecen-1-ol, 1-Dodecanol, 1- Tridecanol, 1-Tetradecanol, 1-Pentadecanol, 1-Hexadecanol, 1-Heptadecanol, 1- Octadecanol, 9-cis-Octadecen-1-ol, 9-trans-Octadecen-1-ol, 9-cis- Octadecen-1,12-diol, all-cis-9,12-Octadecadien-1-ol, all-cis-9,12,15-Octadecatrien-1-ol, 1-Nonadecanol, 1-Eicosanol, 9-cis-Eicosen-1-ol, 5,8,11,14-Eicosatetraen-1-ol, 1-Heneicosanol, 1-Docosanol, 13-cis-Docosen-1-ol, 13-trans-Docosen-1-ol. Auch die entsprechenden Fettamine sind als hydrophobierende Strukturelemente möglich.

Eine weitere Möglichkeit zur Einführung ionenbildender Strukturen ist schließlich die Reaktion NCO-terminierter Oligomerer mit Hydroxycarbonsäuren oder Aminocarbonsäuren mit Alkylen-, Alkenylen- oder Arylen-Gruppierungen wie bei den Dicarbonsäureanhydriden. Als Beispiele seien genannt: Glykolsäure, Milchsäure, Capronsäure und Mandelsäure sowie Aminocapronsäure, Aminododecansäure, Glycin, Alanin und Phenylalanin.

Die einzusetzenden Mengen der Komponenten a), b) und c) ergeben sich aus dem angestrebten Zahlenmittel des Molekulargewichts, dem angestrebten Anteil an ionischen Gruppen und dem angestrebten Vernetzungsgrad.

Die Herstellung der erfindungsgemäß einsetzbaren Polyurethanteilchen kann in Gegenwart von organischen Lösemitteln oder in der Schmelze durchgeführt werden. Als Lösemittel dienen in der Regel flüssige, aliphatische Ketone wie Aceton, Methylethylketon oder Methylisobutylketon, Ester aliphatischer Monocarbonsäuren wie beispielsweise Essigsäuremethylester, Essigsäureethylester, Essigsäurepropylester oder Essigsäureisobutylester, aromatische Kohlenwasserstoffe wie Toluol oder Xylol oder stickstoffhaltige polare aprotische Lösemittel, wie Dimethylformamid (DMF), Dimethylacetamid (DMAc) oder N-Methylpyrrolidon (NMP). Die angegebenen Lösemittel können alleine oder im Gemisch verwendet werden. Bevorzugt ist in der Regel der Einsatz von Aceton oder Methyl-Ethylketon oder von Gemischen aus Aceton und Methyl-Ethylketon.

Die Herstellung von erfindungsgemäß einsetzbaren Polyurethanteilchen aus derartigen in Lösung hergestellten Polymeren kann beispielsweise dadurch erfolgen, daß die Polymerlösung in Wasser eingetragen wird. Der Eintrag sollte Vorzugsweise unter starkem Rühren erfolgen. Wenn das Polymere in einem wassermischbaren Lösemittel hergestellt wurde, so lassen sich bei entsprechender Wahl des Anteils von hydrophilen Gruppen im Polymeren Fällungspartikel erhalten, die eine Teilchengröße innerhalb der oben angegebenen Grenzen aufweisen. Wenn zur Herstellung des Polymeren ein nicht mit Wasser mischbares Lösemittel eingesetzt wurde, so kann beispielsweise eine Emulgierung des in einem nicht mit Wasser mischbaren Lösemittel gelösten Polymeren in Wasser erfolgen, wobei die Tröpfchengröße der Emulsion durch Rührbedingungen, Emulgatortyp und -menge so eingestellt werden kann, daß sie der geforderten Teilchengröße für die Polymerteilchen im wesentlichen entspricht. Anschließend wird das Lösemittel, beispielsweise im Vakuum, entfernt.

Auf diese Weise lassen sich poröse teilchenförmige Polymere erhalten, welche der erfindungsgemäßen Spezifikation genügen. Bei der Verwendung geeignete Polymertypen für das obengenannte Verfahren, wie sie beispielsweise im Rahmen des vorliegenden Textes aufgezählt werden, werden also erfindungsgemäß einsetzbare Polymerteilchen erzeugt. Es ist jedoch im Rahmen der vorliegenden Erfindung ebenso möglich, die aus dem beschriebenen Verfahren resultierenden Polymerteilchen nach der Herstellung, d. h., wenn die Polymerteilchen eine innerhalb der erfindungsgemäß definierten Grenzen für die Teilchengröße liegende Teilchengröße aufweisen, vor der Entfernung des Lösemittels zu vernetzen. Dies erfordert, daß entsprechende Polymere eingesetzt werden, welche über eine funktionelle Gruppe oder ein Gemisch aus zwei oder mehr funktionellen Gruppen verfügen, welche mittels geeigneter Vernetzer ionisch, kovalent oder koordinativ vernetzt werden können.

Im Rahmen einer bevorzugten Ausführungsform der vorliegenden Erfindung werden dabei beispielsweise wasserunlösliche Polymere wie Ethylcellulose, Polyvinylacetat oder Celluloseacetatbutyrat oder wasserunlösliche Copolymere von Polyvinylpyrrolidon und Polyvinylacetat zusammen mit einer hydrophilen Verbindung, vorzugsweise einem Tensid, in einem nicht mit Wasser mischbaren Lösemittel gelöst. Vorzugsweise wird dabei ein nicht mit Wasser mischbares Lösemittel eingesetzt, welches leichter flüchtig ist als Wasser. In eine derartige Lösung wird nun unter Rühren Wasser eingetragen, dem ein ionisches Tensid in einer Konzentration zugesetzt wurde, die unterhalb der kritischen Micellenbildungskonzentration (CMC) liegt. Während des Zutropfens von Wasser entsteht eine O/W-Emulsion. Nach dem vollständigen Zutropfen des Wassers wird nun beispielsweise entweder eine Vernetzung des Polymeren in der organischen Phase vorgenommenen oder unter Vakuum das Lösemittel abgezogen. Es entsteht dabei eine Dispersion, deren Teilchengröße durch die Rührbedingungen und durch die im Wasser vorliegende Tensidmenge und -art steuerbar ist.

Die durchschnittliche Teilchengröße eines im Rahmen einer erfindungsgemäßen Zubereitung einsetzbaren teilchenförmigen Polymeren beträgt vorzugsweise etwa 10 nm bis 50 µm. Insbesondere beträgt die durchschnittliche Teilchengröße etwa 20 nm bis etwa 40 µm, beispielsweise etwa 50 nm bis etwa 20 µm oder etwa 100 nm bis etwa 10 µm. Besonders geeignet sind darüber hinaus Polymerteilchen, deren durchschnittliche Teilchengröße etwa 30 nm bis etwa 5 µm, etwa 50 nm bis etwa 3 µm oder etwa 100 nm bis etwa 1 µm beträgt.

Ein im Rahmen der vorliegenden Erfindung einsetzbares Polymerteilchen weist bei einer Temperatur von weniger als 40 °C bei einem pH-Wert von 5 bis 8 eine Wasserlöslichkeit von weniger als 2 g/l auf. Vorzugsweise liegt die Wasserlöslichkeit jedoch darunter, beispielsweise bei einem Wert von weniger als 1 g/l oder weniger als 0,5 g/l, insbesondere weniger als 0,1 g/l. Im Rahmen einer besonders bevorzugten Ausführungsform der vorliegenden Erfindung ist ein erfindungsgemäß einsetzbares Polymerteilchen unter den obengenannten Bedingungen in Wasser unlöslich.

Ein im Rahmen der vorliegenden Erfindung einsetzbares Polymerteilchen kann in Wasser selbstdispergierbar sein. Unter dem Begriff "selbstdispergierbar" wird dabei im Rahmen der vorliegenden Erfindung verstanden, daß sich ein erfindungsgemäß einsetzbares Polymerteilchen ohne weitere Dispergierhilfsmittel, beispielsweise ohne weitere Tenside in wäßriger Lösung, in Wasser über einen Zeitraum von mindestens 1 h stabil dispergieren läßt. Im Rahmen der vorliegenden Erfindung können jedoch auch Polymerteilchen eingesetzt werden, die in Wasser nur mit Hilfe eines Dispergierhilfsmittels, beispielsweise eines Tensids, dispergierbar sind.

Neben einem Polymerteilchen, wie Sie im Rahmen des vorliegenden Texts oben beschrieben wurden, oder einem Gemisch aus zwei oder mehr solcher Polymerteilchen, enthält eine erfindungsgemäße Zusammensetzung noch mindestens eine hydrophile Substanz mit einem Molekulargewicht von weniger als etwa 1000.

Der Begriff "hydrophile Substanz" umfaßte dabei im Rahmen des vorliegenden Textes unter sich alle Verbindungen, die in Wasser unter den obengenannten Bedingungen löslich oder zumindest für einen bestimmten Zeitraum selbstdispergierbar sind. Dabei ist es für eine "hydrophile Substanz" im Rahmen der vorliegenden Erfindung ausreichend, wenn sie nach erfolgter Dispersion in Wasser für mindestens 5 min, vorzugsweise mindestens 10 min, eine sich nicht entmischende Dispersion bildet. Im Rahmen einer bevorzugten Ausführungsform der vorliegenden Erfindung handelt es sich bei einer "hydrophilen Substanz" wie sie im Rahmen der vorliegenden Erfindung eingesetzt werden kann, um ein Tensid, also eine amphiphile Verbindung.

Als hydrophile Substanzen sind im Rahmen der vorliegenden Erfindung grundsätzlich alle Tenside geeignet.

In von der erfindungsgemäßen Zusammensetzungen einsetzbar sind beispielsweise grenzflächenaktive Substanzen aus der Gruppe der anionischen, nichtionischen, zwitterionischen oder kationischen Tenside.

Als anionische Tenside können beispielsweise solche vom Typ der Sulfonate und Sulfate eingesetzt werden. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, in Betracht, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von 2-Sulfofettsäuren (Estersulfonate), z.B. die 2-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁₋Alkohole mit im Durchschnitt 3,5 Mol Ethylenoxid (EO) oder C₁₂₋₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden, und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Als weitere anionische Tenside kommen insbesondere Seifen in Betracht. Geeignet sind gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z.B. Kokos-, Palmkern- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor. In einer weiteren Ausführungsform der Erfindung werden Tenside in Form ihrer Magnesiumsalze eingesetzt.

Besonders geeignete anionische Tenside sind beispielsweise Ammonium-Polyoxyethylenalkylphenylethersulfonat, Natrium-Polyoxyethylenalkylphenylethersulfonat, Kaliumseifen, Natriumseifen, Natrium-Dioctylsulfosuccinat, Alkylsulfate, Alkylethersulfate, Natriumalkylsulfat, Natriumalkylethersulfat, Polyoxyethylenalkylethersulfate, Natriumpolyoxyethylenalkylethersulfat, Triethanolaminalkylsulfat, Triethanolaminpolyoxyethylenalkylethersulfat, das Natriumsalz des Schwefelsäure-2-ethylhexylalkylesters, Natriumacylmethyltaurate, Natriumlauroylmethyltaurat, Natriumdodecylbenzolsulfonat, Dinatriumlaurylsulfosuccinat, ethoxyliertes Dinatriumlaurylsulfosuccinat, Polycarbonsäuren, Oleylsarcosin, Amidoethersulfate, Lauroylsarcosinat oder Natriumsulfofettsäureester oder Gemische aus zwei oder mehr davon.

Im Rahmen der vorliegenden Erfindung sind Zusammensetzungen bevorzugt, die 1 bis 70 Gew.-%, vorzugsweise 2 bis 60 Gew.-% und insbesondere 3 bis 50 Gew.-% eines oder mehrerer anionischer Tensid(e), enthalten, jeweils bezogen auf die gesamte Zusammensetzung.

Im Rahmen einer bevorzugten Ausführungsform der vorliegenden Erfindung enthält eine erfindungsgemäße Zusammensetzung als hydrophile Verbindung mindestens ein nichtionisches Tensid. Als nichtionische Tenside werden vorzugsweise alkoxylierte, beispielsweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 2 bis 4 EO, C₉₋₁₁-Alkohol mit 2 bis 7 EO, C₁₃₋₁₅₋Alkohole mit 2 bis 8 EO, C₁₂₋₁₈-Alkohole mit 2 bis 7 EO und Mischungen aus diesen, sowie Mischungen aus C₁₂₋₁₄-Alkohol mit 2 bis 4 EO und C₁₂₋₁₈-Alkohol mit 2 bis 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Ebenfalls als nichtionische Tenside im Sinne der vorliegenden Erfindung geeignet sind EO/PO-Addukte der oben genannten Alkohole, insbesondere der oben genannten primären Alkohole mit vorzugsweise 8 bis 18 C-Atomen und durchschnittlich zusammen 1 bis 12 Mol Ethylenoxid und Propylenoxyd (EO/PO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkohol-EO/PO-Addukte mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO/PO pro Mol Alkohol bevorzugt. Zu den bevorzugten ethoxylierten Alkoholen gehören beispielsweise C₁₂₋₁₄-Alkohole mit 2 bis 4 EO/PO, C₉₋₁₁-Alkohol mit 2 bis 7 EO/PO, C₁₃₋₁₅₋Alkohole mit 2 bis 8 EO/PO, C₁₂₋₁₈-Alkohole mit 2 bis 7 EO/PO und Mischungen aus diesen, sowie Mischungen aus C₁₂₋₁₄-Alkohol mit 2 bis 4 EO/PO und C₁₂₋₁₈₋Alkohol mit 2 bis 5 EO/PO. Die angegebenen Alkoxylierungsgrade stellen statistische Mittelwerte dar, die für ein spezielles Produkt eine ganze oder eine gebrochene Zahl sein können. Bevorzugte Alkohol-EO/PO-alkoxylate weisen eine eingeengte Homologenverteilung auf. Zusätzlich zu diesen nichtionischen Tensiden können auch Fettalkohole mit mehr als 12 EO/PO eingesetzt werden. Die EO- und PO-Einheiten können dabei in statistischer Verteilung oder Blockweise im Polymeren vorliegen. Das Verhältnis von EO- zu PO-Einheiten beträgt etwa 10:1 bis etwa 1:10.

Die oben genannten EO- oder EO/PO-Addukte können im Rahmen der vorliegenden Erfindung mit im wesentlichen beliebigen Endgruppen, beispielsweise OH-Endgruppen vorliegen. Es ist jedoch erfindungsgemäß ebenso vorgesehen, daß als nichtionische Tenside sogenannte endgruppenverschlossene Polyalkylenglykole eingesetzt werden. Bei derartigen Polyalkylenglykolen ist die OH-Endgruppe mit einer linearen oder verzweigten Alkylgruppe verschlossen. Beispiele für derartige endgruppenverschlossene Polyalkylenglykole sind Polyethylen- oder Polypropylenglykoldi-C₁₋₁₀-alkylether.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO-A-90/13533 beschriebenen Verfahren hergestellt werden.

Eine weitere Klasse von nichtionischen Tensiden, die vorteilhaft eingesetzt werden kann, sind die Alkylpolyglycoside (APG). Einsetzbare Alkylpolyglycoside genügen der allgemeinen Formel RO(G)_{z}, in der R für einen linearen oder verzweigten, insbesondere in 2-Stellung methylverzweigten, gesättigten oder ungesättigten, aliphatischen Rest mit 8 bis 22, vorzugsweise 12 bis 18 C-Atomen steht und G das Symbol ist, das für eine Glykoseeinheit mit 5 oder 6 C-Atomen, vorzugsweise für Glucose, steht. Der Glycosidierungsgrad z liegt dabei zwischen 1,0 und 4,0, vorzugsweise zwischen 1,0 und 2,0 und insbesondere zwischen 1,1 und 1,4.

Bevorzugt eingesetzt werden lineare Alkylpolyglucoside, also Alkylpolyglycoside, in denen der Polyglycosylrest ein Glucoserest und der Alkylrest ein n-Alkylrest ist.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (I), 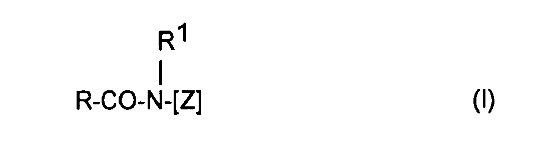 in der RCO für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (II), 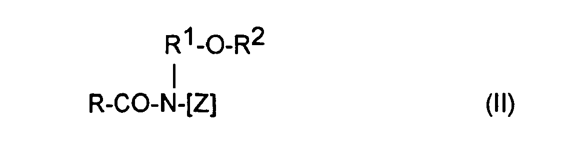 in der R für einen linearen oder verzweigten Alkyl- oder Alkenylrest mit 7 bis 12 Kohlenstoffatomen, R¹ für einen linearen, verzweigten oder cyclischen Alkylrest oder einen Arylrest mit 2 bis 8 Kohlenstoffatomen und R² für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes.

[Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise nach der Lehre der internationalen Anmeldung WO-A-95/07331 durch Umsetzung mit Fettsäuremethylestern in Gegenwart eines Alkoxids als Katalysator in die gewünschten Polyhydroxyfettsäureamide überführt werden.

Im Rahmen der vorliegenden Erfindung sind Zusammensetzungen bevorzugt, die 1 bis 70 Gew.-%, vorzugsweise 2 bis 60 Gew.-% und insbesondere 3 bis 50 Gew.-% eines oder mehrerer nichtionischer Tensid(e), enthalten, jeweils bezogen auf die gesamte Zusammensetzung.

Die erfindungsgemäßen Zusammensetzungen können im Rahmen der vorliegenden Erfindung auch kationische oder ampholytische Tenside als hydrophile Verbindungen enthalten. Beispiele für kationische Tenside sind Salze von primären, sekundären oder tertiären Fettaminen mit etwa 8 bis etwa 24 C-Atomen mit Essigsäure, Schwefelsäure, Salzsäure oder Phosphorsäuren, quaternäre Alkyl- und Alkylbenzolammoniumsalze, insbesondere solche, deren Alkylgruppen etwa 6 bis etwa 24 C-Atome aufweisen, insbesondere die Halogenide, Sulfate, Phosphate oder Acetate, oder Gemische aus zwei oder mehr davon, Alkylpyridinium-, Alkylimidazolinium- oder Alkyloxazolidiniumsalze, insbesondere solche, deren Alkylkette bis zu etwa 18 C-Atome aufweist, beispielsweise die Halogenide, Sulfate, Phosphate oder Acetate, oder Gemische aus zwei oder mehr davon. Ebenfalls als kationische Tenside geeignet sind die sogenannten Esterquats.

Beispiele für ampholytische Tenside sind langkettig substituierte Aminosäuren wie N-Alkyl-di(aminoethyl)glycin oder N-Alkyl-2-aminopropionsäuresalze, Betaine, wie N-(3-Acylamidopropyl)-N,N-dimethylammoniumsalze mit einem C₈₋₁₈-Acylrest oder Alkylimidazoliumbetaine.

Im Rahmen einer bevorzugten Ausführungsform der vorliegenden Erfindung werden als Bestandteil der erfindungsgemäßen Zusammensetzungen hydrophile Verbindungen eingesetzt, die in wäßrigen Lösungen zusammen mit einem teilchenförmigen, porösen Polymeren, wie oben im Rahmen dieses Texts beschrieben, ein Verteilungsgleichgewicht aufweisen. Unter einem "Verteilungsgleichgewicht" wird dabei im Rahmen der vorliegenden Erfindung ein Zustand verstanden, bei dem die hydrophile Verbindungen zu einem bestimmten Teil in wäßriger Lösungen oder Dispersion und zu einem bestimmten Teil im Inneren des Polymerteilchens oder an der Oberfläche des Polymerteilchens adsorbiert vorliegt.

Im Rahmen einer bevorzugten Ausführungsform der vorliegenden Erfindung liegt das Verteilungsgleichgewicht zwischen hydrophiler Verbindung oder Gemisch aus zwei oder mehr hydrophilen Verbindungen in wäßriger Lösung oder Dispersion gemäß der oben stehenden Definition und hydrophiler Verbindung oder Gemisch aus zwei oder mehr hydrophilen Verbindungen die an oder in einem Polymerteilchen oder einem Gemisch aus zwei oder mehr Polymerteilchen adsorbiert sind bei etwa 1:100 bis etwa 100:1, bezogen auf das Gewicht der hydrophilen Verbindung. Es ist dabei im Rahmen der vorliegenden Erfindung ausreichend, wenn eine der in der erfindungsgemäßen Zusammensetzung vorliegenden hydrophilen Verbindungen ein Verteilungsgleichgewicht innerhalb der genannten Grenzen aufweist.

Vorzugsweise werden im Rahmen der Erfindung Kombinationen aus hydrophilen Verbindungen und Polymerteilchen eingesetzt, die ein Verteilungsgleichgewicht im obenstehenden Sinne von etwa 1:1 bis etwa 1:80 oder etwa 1:2 bis etwa 1:60 aufweisen.

Im Rahmen einer weiteren bevorzugten Ausführungsform der vorliegenden Erfindungen werden als hydrophile Verbindungen nichtionische Tenside mit einem HLB-Wert von etwa 4 bis etwa 25, insbesondere etwa 5 bis etwa 22 oder etwa 6 bis etwa 18, beispielsweise etwa 7 bis etwa 14, eingesetzt.

Neben den bislang beschriebenen Bestandteilen, nämlich einem oder mehreren porösen, teilchenförmigen Polymeren und einer oder mehreren hydrophilen Verbindungen, kann eine erfindungsgemäße Zusammensetzung noch weitere Zusatzstoffe enthalten.

Als weitere Zusatzstoffe eignen sich beispielsweise wasserlösliche Verbindungen mit einem Molekulargewicht von mehr als 1000. Hierzu zählen beispielsweise Polyacrylsäure, Polymethacrylsäure, Polyalkylenoxide wie Polyethylenglykol oder Polypropylenglykol, Polyvinylpyrrolidon, Polyoxazoline, Polyvinylalkohole, Isobutylen-Maleinsäureanhydrid Copolymere, Polyacrylsäureamid, CelluloseDerivate wie Viskose, Hydroxyethylcellulose, Hydroxypropylcellulose oder Carboxymethylcellulose, Stärkederivate wie lösliche Stärke oder Carboxymethylstärke, Agarose oder Hyaluronsäure. Weiterhin als weitere Zusatzstoffe geeignet sind Celluloseacetat, Cellulosenitrat, Celluloseacetatbutyrat, Gelatine, Curdlan, Alginate, Pektinate, Carageenane oder Chitosane.

Ebenfalls als weitere Zusatzstoffe geeignet sind wasserlösliche oder wasserunlösliche anorganische Stoffe wie Schichtsilikate, Sepiolite, Kaolin, Kieselgel oder Wasserglas.

Im Rahmen einer bevorzugten Ausführungsform der vorliegenden Erfindung enthält eine erfindungsgemäße Zusammensetzung mindestens ein Lösemittel. Als Lösemittel eignen sich grundsätzlich Wasser und alle Lösemittel, die mit Wasser mischbar sind und eine Siedepunkt von weniger als etwa 120 °C, vorzugsweise von weniger als etwa 100 °C aufweisen. Besonders geeignet sind im Rahmen der vorliegenden Erfindungen Wasser, Ethanol, Propanol, Isopropanol oder Aceton oder Gemische aus zwei oder mehr davon.

Eine erfindungsgemäße Zusammensetzung kann weiterhin pH-Wert regulierende Verbindungen enthalten. Als Verbindungen zur Regulierung des pH-Wert eignen sich grundsätzlich alle in einem der obengenannten Lösemittel löslichen Säuren oder Basen oder Puffersysteme. Besonders geeignet sind im Rahmen der vorliegenden Erfindung beispielsweise Alkalihydroxide wie NaOH oder KOH, Carbonate, Silikate, Phosphate, Hydrogenphosphate, Sulfate, Citrate, Borate oder Salze von Carbonsäuren.

Ebenfalls als weitere Zusatzstoffe im Rahmen der erfindungsgemäßen Zusammensetzungen geeignet sind Weichmacher, die sich auch als Hilfsmittel zur Filmbildung eignen. Als Weichmacher eignen sich beispielsweise Phthalate (Phthalsäureester) wie Dioctylphthalat [DOP; Bis(2-ethylhexyl)-phthalat], Diisononyl- (DINP), Düsodecylphthalat (DIDP), Phthalsäureester mit (überwiegend) linearen C6- bis C11-Alkoholen wie Dibutylphthalat (DBP), Diisobutylphthalat (DIBP), Dicyclohexylphthalat (DCHP), Dimethylphthalat (DMP) oder Diethylphthalat (DEP), Benzylbutyl- (BBP), Butyloctyl-, Butyldecyl- oder Dipentylphthalat, Bis(2-methoxyethyl)-phthalat oder Dihexyl-dicaprylphthalat (DCP) oder Gemische aus zwei oder mehr davon.

Ebenfalls als Weichmacher geeignet sind Trimellitate (Trimellithsäureester) mit (überwiegend) linearen C6- bis C11-Alkoholen wie Tris(2-ethylhexyl)trimellitat (TOTM).

Ebenfalls als Weichmacher geeignet sind acyclische (aliphatische) Dicarbonsäureester wie Dioctyladipat [DOA; Bis(2-ethylhexyl)-adipat] oder Diisodecyladipat (DIDA). Ferner eignen sich noch Dibutylsebacat (DBS), Dioctylsebacat [DOS, Bis(2-ethylhexyl)-sebacat] oder Ester der Azelainsäure.

Weiterhin als Weichmacher geeignet sind Polymerwichmacher wie Polyester aus Adipin-, Sebacin-, Azelain- u. Phthalsäure mit Diolen wie 1,3-Butandiol, 1,2-Propandiol, 1,4-Butandiol, 1,6-Hexandiol. Auch Butadien-Acrylnitril-Copolymere können als polymere Weichmacher in Betracht kommen.

Darüber hinaus sind als Weichmacher auch Phosphate (Phosphorsäureester) wie Trikresylphosphat (TCF), Triphenylphosphat (TPF), Diphenylkresylphosphat (DPCF), Diphenyloctylphosphat [DPOF, (2-Ethylhexyl)-diphenylphosphat] oder Tris(2-ethylhexyl)-phosphat (TOF), Tris(2-butoxyethyl)phosphat geeignet.

Als Weichmacher eignen sich weiterhin Fettsäureester wie Butyloleat oder Butylstearat, Methyl- oder Butylester der acetylierten Ricinolfettsäure oder Fettsäureglykolester wie Triethylenglykol-bis(2-ethylbutyrat).

Weiterhin als Weichmacher geeignet sind Hydroxycarbonsäureester, beispielsweise Zitronensäureester wie Tributyl-O-acetylcitrat oder Triethyl-O-acetylcitrat oder Weinsäureester oder Milchsäureester.

Ebenfalls als Weichmacher geeignet sind Epoxidweichmacher wie epoxidierte Fettsäure-Derivate, beispielsweise Triglyceride oder Monoester wie die Ester der Epoxystearinsäure oder epoxidierte Sojaöle (EPSO) oder Leinöle (EPLO).

Die erfindungsgemäße Zusammensetzung kann darüber hinaus als Zusatzstoffe noch UV-Stabilisatoren, Antioxidantien, Duftstoffe, Farbstoffe, Konservierungsmittel, Komplexierungsmittel und dergleichen enthalten.

Zu den im Rahmen der Erfindung als Zusatzstoffe einsetzbaren Stabilisatoren oder Antioxidantien, zählen gehinderte Phenole hohen Molekulargewichts (Mₙ), polyfunktionelle Phenole und schwefel- und phosphorhaltige Phenole. Im Rahmen der Erfindung als Zusatzstoffe einsetzbare Phenole sind beispielsweise 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octadecyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 6-(4-Hydroxyphenoxy)-2,4-bis(n-octyl-thio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat].

Eine erfindungsgemäße Zusammensetzung enthält im Rahmen einer bevorzugten Ausführungsform der vorliegenden Erfindung mindestens etwa 10 Gew.-%, beispielsweise mindestens etwa 20 oder mindestens etwa 50 Gew.-% Wasser.

Eine erfindungsgemäße Zusammensetzung kann dabei als niedrigviskose, wäßrige Flüssigkeit, als mittel oder hochviskose wäßrige Flüssigkeit, als Gel oder als Paste vorliegen. Im Rahmen einer bevorzugten Ausführungsform der vorliegenden Erfindung liegt eine erfindungsgemäße Zusammensetzung als niedrigviskose, wäßrige Flüssigkeit vor.

Der Gehalt einer erfindungsgemäßen Zusammensetzung an porösen, teilchenförmigen Polymeren beträgt im Rahmen einer bevorzugten Ausführungsform der vorliegenden Erfindung mindestens etwa 0,2 Gew.-%. Vorzugsweise liegt der Gehalt an porösen, teilchenförmigen Polymeren bei etwa 0,5 bis etwa 40 Gew.-%, insbesondere bei etwa 1 bis etwa 30 Gew.-% oder etwa 2 bis etwa 20 Gew.-%, beispielsweise etwa 3 bis etwa 15 Gew.-% oder etwa 5 bis etwa 10 Gew.-%.

Der Gehalt einer erfindungsgemäßen Zusammensetzung an hydrophilen Verbindungen beträgt im Rahmen einer bevorzugten Ausführungsform der vorliegenden Erfindung mindestens etwa 0,2 Gew.-%. Vorzugsweise liegt der Gehalt an hydrophilen Verbindungen bei etwa 0,5 bis etwa 40 Gew.-%, insbesondere bei etwa 1 bis etwa 30 Gew.-% oder etwa 2 bis etwa 20 Gew.-%, beispielsweise etwa 3 bis etwa 15 Gew.-% oder etwa 5 bis etwa 10 Gew.-%.

Im Rahmen einer weiteren bevorzugten Ausführungsform beträgt das Gewichtsverhältnis von porösen, teilchenförmigen Polymeren zu hydrophilen Verbindungen etwa 1 : 5 bis etwa 5 : 1. Im Rahmen einer weiteren bevorzugten Ausführungsform der vorliegenden Erfindung werden die Inhaltsstoffe einer erfindungsgemäßen Zusammensetzung und deren Einsatzmengen so gewählt, daß ein mit Hilfe einer erfindungsgemäßen Zusammensetzung hergestellter Film unmittelbar nach der Herstellung einen Kontaktwinkel gegen Wasser von weniger als 40 °, insbesondere von weniger als 30°, weniger als 20 ° oder weniger als 10 ° aufweist.

Der Kontaktwinkel wird dabei mit einem Krüss Drop Shape Analyzer DSA 10 mit der zugehörigen Software gemessen. Hierzu wurde ein Tropfenvolumen von 10 µl auf die entsprechende Oberfläche aufgebracht und eine Videoaufnahme des Tropfenverlaufs (max. 7 min) durchgeführt. Der zeitabhängige Randwinkel des Tropfens wurde aus der Videosequenz bestimmt.

Eine erfindungsgemäße Zusammensetzung hat beispielsweise die folgende Zusammensetzung:
- teilchenförmige Polymere 1 bis 30 Gew.-%
- hydrophile Verbindungen 1 bis 30 Gew.-%
- Lösemittel 20 bis 98 Gew.-%
- Zusatzstoffe 0 bis 20 Gew.-%.

Eine erfindungsgemäße Zusammensetzung läßt sich grundsätzlich auf beliebige Weise, insbesondere durch Vermischen der an der Zusammensetzung beteiligten Verbindungen herstellen. So kann eine erfindungsgemäße Zusammensetzung beispielsweise dadurch hergestellt werden, daß zunächst eine Dispersion der porösen Polymerteilchen in einem Lösemittel, beispielsweise in Wasser vorgenommen wird und anschließend zu dieser Dispersion die weiteren Bestandteile der Zusammensetzung zugegeben werden. Es ist jedoch ebenso möglich, daß zunächst eine Dispersion oder Lösung eines beliebigen Bestandteils der Zusammensetzung, beispielsweise der hydrophilen Verbindung, in Wasser hergestellt wird und anschließend die Polymerteilchen und gleichzeitig oder anschließend weitere in der Zusammensetzung vorgesehene Verbindungen zugegeben werden.

Gegenstand der vorliegenden Erfindung ist daher auch ein Verfahren zur Herstellung einer erfindungsgemäßen Zusammensetzung, bei dem eine wäßrige Lösung einer hydrophilen Verbindung und eine wäßrige Dispersion eines teilchenförmigen Polymeren vermischt werden oder eine wasserlösliche oder wasserdispergierbare hydrophile Verbindung mit einer wäßrigen Dispersion eines teilchenförmigen Polymeren vermischt wird oder ein teilchenförmiges Polymeres in einer wäßrigen Lösung einer hydrophilen Verbindung dispergiert wird.

In Abhängigkeit vom bereits oben beschriebenen Verteilungsgleichgewicht zwischen hydrophiler Verbindung und Polymerteilchen wird ein Teil der hydrophilen Verbindungen am oder im Polymerteilchen adsorbiert während ein weiterer Teil der hydrophilen Verbindungen in wäßriger Lösung oder Dispersion verbleibt. Es kann gegebenenfalls im Rahmen des erfindungsgemäßen Verfahrens erforderlich sein, die Polymerteilchen zunächst, wie oben beschrieben, in einen im Sinne der vorliegenden Erfindung "porösen" Zustand zu versetzen. Zu diesem Zweck wird das Polymerteilchen vorzugsweise in einem entsprechenden Lösemittel, beispielsweise Wasser, vorgequollen, bevor die Zugabe der hydrophilen Verbindung erfolgt. Es ist jedoch ebenso möglich die hydrophile Verbindung und das Polymerteilchen gleichzeitig in ein entsprechendes Lösemittel einzuführen und das Aufquellen des Polymerteilchens in Gegenwart der hydrophilen Verbindung durchzuführen.

Im Rahmen einer weiteren Ausführungsform der vorliegenden Erfindungen werden die erfindungsgemäßen Zusammensetzungen durch eine Fällungsreaktion erzeugt. Hierzu wird zunächst unter Bedingungen A bei denen ein Polymeres oder ein Gemisch aus zwei oder mehr Polymeren und eine wasserlösliche oder wasserdispergierbare hydrophile Verbindung oder ein Gemisch aus zwei oder mehr wasserlöslichen oder wasserdispergierbaren hydrophilen Verbindungen gemeinsam löslich sind, eine Lösung, enthaltend das Polymere oder das Gemisch aus zwei oder mehr Polymeren und die wasserlösliche oder wasserdispergierbare hydrophile Verbindung oder das Gemisch aus zwei oder mehr wasserlöslichen oder wasserdispergierbaren hydrophilen Verbindungen hergestellt.

Die so erhaltene Lösung wird anschließend Bedingungen B ausgesetzt, unter denen das Polymere oder das Gemisch aus zwei oder mehr Polymeren nicht mehr löslich ist und als poröses teilchenförmiges Polymeres ausfällt.

Grundsätzlich gilt für die Bedingungen A und B, daß sie so gewählt sein müssen, daß beim Übergang von A zu B das gelöste Polymere zu einem porösen, teilchenförmigen Polymeren ausfällt oder sich zumindest nach einem bestimmten Zeitraum unter Bedingungen B zu einem porösen, teilchenförmigen Polymeren gemäß den oben angeführten Bedingungen umwandelt. Darüber hinaus müssen die Bedingungen derart gewählt werden, daß beim Übergang von A zu B Polymerpartikel entstehen, die im Hinblick auf ihre Größe den obengenannten Anforderungen entsprechen.

Gegenstand der vorliegenden Erfindung ist daher auch ein Verfahren zur Herstellung einer erfindungsgemäßen Zusammensetzung, bei dem unter Bedingungen A bei denen ein Polymeres oder ein Gemisch aus zwei oder mehr Polymeren und eine wasserlösliche oder wasserdispergierbare hydrophile Verbindung oder ein Gemisch aus zwei oder mehr wasserlöslichen oder wasserdispergierbaren hydrophilen Verbindungen gemeinsam löslich sind, eine Lösung, enthaltend das Polymere oder das Gemisch aus zwei oder mehr Polymeren und die wasserlösliche oder wasserdispergierbare hydrophile Verbindung oder das Gemisch aus zwei oder mehr wasserlöslichen oder wasserdispergierbaren hydrophilen Verbindungen hergestellt wird und die Lösung anschließend Bedingungen B ausgesetzt wird, unter denen das Polymere oder das Gemisch aus zwei oder mehr Polymeren nicht mehr löslich ist und als poröses teilchenförmiges Polymeres ausfällt.

Im Rahmen einer weiteren Ausführungsform der vorliegenden Erfindung wird eine erfindungsgemäße Zusammensetzung durch ein Emulsionsverfahren hergestellt. Dabei wird ein nicht in Wasser lösliches Polymeres zusammen mit einer hydrophilen Verbindung der oben genannten Art in einem nicht mit Wasser mischbaren Lösemittel gelöst und diese Lösung anschließend in Wasser, vorzugsweise in Gegenwart eines als Emulgator wirkenden Tensids, emulgiert.

Anschließend wird das nicht mit Wasser mischbare Lösemittel aus der Emulsion entfernt, beispielsweise durch Anlegen eines Vakuums. Nach Entfernung des nicht mit Wasser mischbaren Lösemittels erhält man eine erfindungsgemäße Zusammensetzung, in welcher das Polymere als teilchenförmiges Polymeres vorliegt. Die Teilchengröße läßt sich dabei beispielsweise über die Tröpfchengröße in der Emulsion einstellen, die wiederum durch die Wahl der Art und der Menge des Emulgators und die Rührgeschwindigkeit eingestellt werden kann.

Gegenstand der vorliegenden Erfindung ist daher auch ein Verfahren zur Herstellung einer erfindungsgemäßen Zusammensetzung, bei dem eine Lösung einer hydrophilen Verbindung und eines Polymeren in einem nicht mit Wasser mischbaren Lösemittel in Wasser unter Erhalt einer Emulsion emulgiert und anschließend das nicht mit Wasser mischbare Lösemittel aus der Emulsion entfernt wird, so daß eine Dispersion eines teilchenförmigen Polymeren erhalten wird.

Der Übergang von A nach B beinhaltet somit eine Änderung der Bedingungen, unter denen das Polymere löslich ist. Vorzugsweise wird das erfindungsgemäße Verfahren derart durchgeführt, daß der Wechsel von Bedingungen A zu Bedingungen B mindestens eine der folgenden Änderungen beinhaltet:
a) Veränderung des pH-Werts
b) Veränderung der Lösemittelpolarität
c) Veränderung der Temperatur
d) Veränderung der Lösemittelmenge.

Eine Beschreibung eines entsprechenden Verfahrens wird beispielsweise von R. Bodmeyer et al. in J. Microencapsulation, 1991, Vol. 8, No.2, 161 - 170 beschrieben, wobei auf die Offenbarung dieser Literaturstelle ausdrücklich hingewiesen wird und die Offenbarung des zitierten Textes als Bestandteil der Offenbarung des vorliegenden Textes betrachtet wird.

Die erfindungsgemäßen Zusammensetzungen eignen sich zur Herstellung von Filmen auf beliebigen Oberflächen.

Gegenstand der vorliegenden Erfindung ist daher auch ein Polymerfilm, der im wesentlichen transparent ist, hergestellt aus einer erfindungsgemäßen Zusammensetzung.

Unter einem "Polymerfilm" wird im Rahmen der vorliegenden Erfindung ein im wesentlichen durchgehender Belag auf einer Oberfläche verstanden. Ein erfindungsgemäßer Polymerfilm kann freitragend sein, in der Regel wird jedoch unter einem "Polymerfilm" im Rahmen der vorliegenden Erfindung ein nicht freitragender, dünner, auf einer Oberfläche befindlicher Film verstanden. Die Filmdicke eines erfindungsgemäßen Polymerfilms kann etwa 10 nm bis etwa 200 µm, insbesondere etwa 50 nm bis etwa 100 µm betragen. Ein erfindungsgemäßer Polymerfilm weist vorzugsweise einen Kontaktwinkel gegen Wasser von weniger als 40 °, beispielsweise weniger als 30 ° oder weniger als 20 ° auf. Im Rahmen einer bevorzugten Ausführungsform der vorliegenden Erfindung weist ein erfindungsgemäßer Polymerfilm einen Kontaktwinkel gegen Wasser von weniger als 10° auf.

Ein erfindungsgemäßer Polymerfilm läßt sich durch einfaches Auftragen einer erfindungsgemäßen Zusammensetzung auf einer Oberfläche erzeugen. Gegenstand der vorliegenden Erfindung ist daher auch ein Verfahren zur Herstellung eines erfindungsgemäßen Polymerfilms, bei dem eine erfindungsgemäße Zusammensetzung auf eine Oberfläche aufgetragen und verfilmt wird.

Ein erfindungsgemäßer Polymerfilm enthält vorzugsweise weniger als etwa 50 Gew.-% Wasser, beispielsweise weniger als etwa 30 Gew.-%.

Der Anteil an in der zur Herstellung einer erfindungsgemäßen Polymerfilms eingesetzten Zusammensetzung ursprünglich vorliegenden teilchenförmigen Polymeren im erfindungsgemäßen Polymerfilm beträgt mindestens etwa 20 Gew.-%, vorzugsweise mindestens etwa 30 Gew.-% oder mindestens etwa 35 Gew.-%.

Der Anteil an hydrophilen Verbindungen beträgt mindestens etwa 10 Gew.-%, vorzugsweise mindestens etwa 20 oder mindestens etwa 30 Gew.-%.

Das Verhältnis von ursprünglich teilchenförmigen Polymeren zu hydrophilen Verbindungen beträgt im erfindungsgemäßen Polymerfilm vorzugsweise etwa 1:5 bis etwa 5: 1 oder etwa 1:3 bis etwa 3 : 1.

Die Erfindung wird nachfolgend durch Beispiele näher erläutert.

### Beispiele

### Beispiel 1:

Einer 10 Gew.-%igen ethanolischen Lösung von Eudragit® RS (Polymethacrylsäuremethylester-co-methacrylsäureammonioalkylester) wurden 5 Gew.-% Dehypon LS 54 (Hersteller: Cognis Deutschland GmbH) zugesetzt und bis zur vollständigen Auflösung gerührt. Die so erhaltene Lösung wurde in die dreifache Menge Wasser eingetragen, wobei das Polymere feindispers ausfiel. Die durchschnittliche Teilchengröße betrug etwa 150 nm. Die so erhaltene Dispersion wurde auf eine Glasplatte aufgetragen. Nach dem Eintrocknen bildete sich ein transparenter Film. Der Randwinkel bei Benetzung des Films mit Wasser betrug weniger als 10° und blieb auch nach 2 minütigem Überspülen des Films mit fließendem Wasser konstant. Erst nach diesem Zeitraum nahm der Kontaktwinkel langsam zu.

### Beispiel 2:

Einer 10 Gew.-%igen ethanolischen Lösung von Eudragit® RS (Polymethacrylsäuremethylester-co-methacrylsäureammonioalkylester) wurden 5 Gew.-% Dehypon LS 24 (Hersteller: Cognis Deutschland GmbH) zugesetzt und bis zur vollständigen Auflösung gerührt. Die so erhaltene Lösung wurde in die dreifache Menge Wasser eingetragen, wobei das Polymere feindispers ausfiel. Die durchschnittliche Teilchengröße betrug etwa 350 nm. Die so erhaltene Dispersion wurde auf eine Glasplatte aufgetragen. Nach dem Eintrocknen bildete sich ein transparenter Film. Der Randwinkel bei Benetzung des Films mit Wasser betrug weniger als 10° und blieb auch nach 2 minütigem Überspülen des Films mit fließendem Wasser konstant. Erst nach diesem Zeitraum nahm der Kontaktwinkel langsam zu.

### Beispiel 3:

Ein handelsüblicher CD-Rohling wurde als Modellsubstrat mit einer Dispersion gemäß Beispiel 1 durch Aufsprühen aus einer Spritzpistole beschichtet. Nach dem Trocknen der Schicht wurden beschichteten Rohlinge mit Aufschlämmungen von Kaolinpulver und Ultramarinpigmenten mit Hilfe eines Pinsels bestrichen. Zu Vergleichszwecken wurden unbehandelte CD-Rohlinge ebenfalls mit den genannten Aufschlämmungen bestrichen. Anschließend wurden sowohl die beschichteten als auch die unbeschichteten Rohlinge für 1 min ohne weitere mechanische Einwirkung mit einem Wasserstrom überspült. Nach dem Trocknen zeigte sich, daß die Anschmutzungen auf den unbehandelten Substraten nahezu unverändert vorlagen, auf den beschichteten Substraten hingegen vollständig entfernt waren. Die Beschichtung selbst war noch intakt.

### Beispiel 4:

Eine entfettete Fensterglasscheibe wurde auf einer Hälfte mit einem Film aus einer Zusammensetzung gemäß Beispiel 1 in einer Dicke von 0,2 µm beschichtet, die verbleibenden Hälfte wurde ohne Beschichtung belassen. Die gesamte Fensterglasscheibe wurde anschließend mit einer 0,1 %igen Dispersion von Ruß, Staub und Hautfett besprüht. Auf der beschichteten Seite der Glasplatte beobachtete man ein gleichmäßiges Benetzen der Anschmutzungsdispersion und einen homogenen Ablauf derselben. Auf der unbeschichteten Seite riß der Benetzungsfilm auf und es bildeten sich Flüssigkeitsinseln auf der Glasoberfläche. Nach dem Eintrocknen der Anschmutzdispersionen erkannte man auf der beschichteten Seite einen kaum wahrnehmbaren Schmutzschleier, auf der unbeschichteten Seite jedoch ein intensives Muster von Tropfenrändern und eine insgesamt höhere Menge an Schmutz.

### Beispiel 5:

Es wurde eine organische Lösung aus 50 g Ethylacetat, 0,05 g n-Decan, 1 g Celluloseacetatbutyrat und 0,5 g Dehypon LS 24 und eine wäßrige Lösung aus 100 g VE-Wasser und 0,02 g SDS (Texapon K 12) hergestellt. Die organische Lösung wurde vorgelegt und die wäßrige Lösung langsam sukzessive unter Ultraturrax-Behandlung (ca. 12.000 Umdrehungen/Minute) eingerührt. Anschließend wurde für etwa zehn Minuten nachdispergiert. Es entstand eine stabile, milchig-weiße O/W-Emulsion (nachgewiesen durch Leitfähigkeitsmessung). Die Emulsion wurde anschließend in einen Rundkolben überführt und das Lösemittel durch leichtes Erwärmen und Anlegen eines Vakuums abgezogen. Nach vollständigem Entfernen des Ethylacetats erhielt man eine stabile, milchig-weiße Dispersion. Die Partikelgröße d50 betrug 250 nm. Die Dispersion ließ sich auf Glas verfilmen, wobei ein kohärenter, leicht trüber Film entstand. Der Film wies direkt nach dem Auftrag gegenüber Wasser einen Randwinkel von weniger als 10° auf.

## Patentansprüche

1. Zusammensetzung, mindestens enthaltend Wasser, ein poröses teilchenförmiges Polymeres oder ein Gemisch aus zwei oder mehr solcher Polymeren und mindestens eine wasserlösliche oder wasserdispergierbare hydrophile Verbindung mit einem Molekulargewicht von weniger als 1000 oder ein Gemisch aus zwei oder mehr davon, wobei
- das Gewichtsverhältnis von Polymerem oder Polymeren zu hydrophiler Verbindung oder hydrophilen Verbindungen 1 : 10 bis 10 : 1 beträgt,
- die durchschnittliche Teilchengröße des Polymeren 1 nm bis 50 µm beträgt und
- das Polymere bei einer Temperatur von weniger als 40 °C bei einem pH-Wert von 5 bis 8 eine Wasserlöslichkeit von weniger als 2 g/l aufweist.

2. Zusammensetzung nach Anspruch 1, **dadurch gekennzeichnet, daß** die durchschnittliche Teilchengröße der Polymerteilchen weniger als 20 µm beträgt.

3. Zusammensetzung nach einem der Ansprüche 1 oder 2, **dadurch gekennzeichnet, daß** sie als hydrophile Verbindung ein nichtionisches Tensid enthält.

4. Zusammensetzung nach einem der Ansprüche 1 bis 3, **dadurch gekennzeichnet, daß** sie mindestens 20 Gew.-% Wasser enthält.

5. Polymerfilm, der im wesentlichen transparent ist, erhältlich aus einer Zusammensetzung gemäß einem der Ansprüche 1 bis 4.

6. Polymerfilm nach Anspruch 5, **dadurch gekennzeichnet, daß** er einen Kontaktwinkel gegen Wasser von weniger als 40° aufweist.

7. Verfahren zur Herstellung eines Polymerfilms gemäß Anspruch 5 oder 6, bei dem eine Zusammensetzung gemäß einem der Ansprüche 1 bis 4 auf eine Oberfläche aufgetragen und verfilmt wird.

8. Verfahren zur Herstellung einer Zusammensetzung gemäß einem der Ansprüche 1 bis 4, bei dem eine wäßrige Lösung einer hydrophilen Verbindung und eine wäßrige Dispersion eines teilchenförmigen Polymeren vermischt werden oder eine wasserlösliche oder wasserdispergierbare hydrophile Verbindung mit einer wäßrigen Dispersion eines teilchenförmigen Polymeren vermischt wird oder ein teilchenförmiges Polymeres in einer wäßrigen Lösung einer hydrophilen Verbindung dispergiert wird.

9. Verfahren zur Herstellung einer Zusammensetzung gemäß einem der Ansprüche 1 bis 4, bei dem unter Bedingungen A bei denen das Polymere oder das Gemisch aus zwei oder mehr Polymeren und die wasserlösliche oder wasserdispergierbare hydrophile Verbindung oder das Gemisch aus zwei oder mehr wasserlöslichen oder wasserdispergierbaren hydrophilen Verbindungen gemeinsam löslich sind, eine Lösung, enthaltend das Polymere oder das Gemisch aus zwei oder mehr Polymeren und die wasserlösliche oder wasserdispergierbare hydrophile Verbindung oder das Gemisch aus zwei oder mehr wasserlöslichen oder wasserdispergierbaren hydrophilen Verbindungen hergestellt wird und die Lösung anschließend Bedingungen B ausgesetzt wird, unter denen das Polymere oder das Gemisch aus zwei oder mehr Polymeren nicht mehr löslich ist und als teilchenförmiges Polymeres ausfällt.

10. Verfahren nach Anspruch 9, **dadurch gekennzeichnet, daß** der Wechsel von Bedingungen A zu Bedingungen B mindestens eine der folgenden Änderungen beinhaltet:
a) Veränderung des pH-Werts
b) Veränderung der Lösemittelpolarität
c) Veränderung der Temperatur
d) Veränderung der Lösemittelmenge.

11. Verfahren zur Herstellung einer Zusammensetzung gemäß einem der Ansprüche 1 bis 4, bei dem eine Lösung einer hydrophilen Verbindung und eines Polymeren in einem nicht mit Wasser mischbaren Lösemittel in Wasser unter Erhalt einer Emulsion emulgiert und anschließend das nicht mit Wasser mischbare Lösemittel aus der Emulsion entfernt wird, so daß eine Dispersion eines teilchenförmigen Polymeren erhalten wird.

## Claims

1. Composition, at least comprising water, a porous particulate polymer, or a mixture of two or more such polymers, and at least one water-soluble or water-dispersible hydrophilic compound with a molecular weight below 1000, or a mixture composed of two or more of these, where
- the ratio by weight of polymer or polymers to hydrophilic compound or hydrophilic compounds is from 1:10 to 10:1,
- the median particle size of the polymer is from 1 nm to 50 µm, and
- the water-solubility of the polymer is below 2 g/l at a temperature below 40°C at a pH of from 5 to 8.

2. Composition according to Claim 1, **characterized in that** the median particle size of the polymer particles is below 20 µm.

3. Composition according to either of Claims 1 and 2, **characterized in that** it comprises, as hydrophilic compound, a nonionic surfactant.

4. Composition according to any of Claims 1 to 3, **characterized in that** it comprises at least 20% by weight of water.

5. Polymer film, obtainable from a composition according to any of Claims 1 to 4.

6. Polymer film according to Claim 5, **characterized in that** it has a contact angle below 40° with respect to water.

7. Process for producing a polymer film according to Claim 5 or 6, in which a composition according to any of Claims 1 to 4 is applied to a surface and is filmed.

8. Process for preparing a composition according to any of Claims 1 to 4, in which an aqueous solution of a hydrophilic compound and an aqueous dispersion of a particulate polymer are mixed, or a water-soluble or water-dispersible hydrophilic compound is mixed with an aqueous dispersion of a particulate polymer, or a particulate polymer is dispersed in an aqueous solution of a hydrophilic compound.

9. Process for preparing a composition according to any of Claims 1 to 4, in which, under conditions A in which the polymer or the mixture composed of two or more polymers is soluble, together with the water-soluble or water-dispersible hydrophilic compound or the mixture composed of two or more water-soluble or water-dispersible hydrophilic compounds, a solution is prepared, comprising the polymer or the mixture composed of two or more polymers, and comprising the water-soluble or water-dispersible hydrophilic compound or the mixture composed of two or more water-soluble or water-dispersible hydrophilic compounds, and the solution is then exposed to conditions B under which the polymer or the mixture composed of two or more polymers then has no solubility and precipitates as a particulate polymer.

10. Process according to Claim 9, **characterized in that** the change from conditions A to conditions B includes at least one of the following alterations:
a) alteration of the pH
b) alteration of the solvent polarity
c) alteration of the temperature
d) alteration of the amount of solvent.

11. Process for preparing a composition according to any of Claims 1 to 4, in which a solution of a hydrophilic compound and of a polymer in a solvent immiscible with water is emulsified in water to give an emulsion, and then the solvent immiscible with water is removed from the emulsion, thus giving a dispersion of a particulate polymer.

## Revendications

1. Composition contenant au moins de l'eau, un polymère particulaire poreux ou un mélange de deux ou de plus de deux polymères de ce type, et au moins un composé hydrophile soluble ou dispersible dans l'eau, ayant une masse moléculaire inférieure à 1000, ou un mélange de deux ou de plus de deux composés de ce type, dans laquelle
- le rapport pondéral du ou des polymères au composé hydrophile ou aux composés hydrophiles est de 1 : 10 à 10 : 1,
- la taille moyenne des particules du polymère est de 1 nm à 50 µm, et
- le polymère présente, à une température inférieure à 40°C, à un pH de 5 à 8, une solubilité dans l'eau inférieure à 2 g/l.

2. Composition selon la revendication 1, **caractérisée en ce que** la taille moyenne des particules du polymère est inférieure à 20 µm.

3. Composition selon l'une des revendications 1 ou 2, **caractérisée en ce que** comme composé hydrophile, elle contient un tensioactif non ionique.

4. Composition selon l'une quelconque des revendications 1 à 3, **caractérisée en ce qu'**elle contient au moins 20 % en poids d'eau.

5. Film polymère essentiellement transparent, pouvant être obtenu à partir d'une composition selon l'une quelconque des revendications 1 à 4.

6. Film polymère selon la revendication 5, **caractérisé en ce qu'**il présente un angle de contact avec l'eau inférieur à 40°.

7. Procédé de préparation d'un film polymère selon la revendication 5 ou 6, dans lequel une composition selon l'une quelconque des revendications 1 à 4 est appliquée sur une surface et transformée en film.

8. Procédé de préparation d'une composition selon l'une quelconque des revendications 1 à 4, dans lequel une solution aqueuse d'un composé hydrophile et une dispersion aqueuse d'un polymère particulaire sont mélangées, ou un composé hydrophile soluble ou dispersible dans l'eau est mélangé avec une dispersion aqueuse d'un polymère particulaire, ou un polymère particulaire est dispersé dans une solution aqueuse d'un composé hydrophile.

9. Procédé de préparation d'une composition selon l'une quelconque des revendications 1 à 4, dans lequel, dans les conditions A selon lesquelles le polymère ou le mélange de deux ou de plus de deux polymères et du composé hydrophile soluble ou dispersible dans l'eau, ou le mélange de deux ou de plus de deux composés hydrophiles solubles ou dispersibles dans l'eau sont solubles ensemble, une solution, contenant le polymère ou le mélange de deux ou de plus de deux polymères et le composé hydrophile soluble ou dispersible dans l'eau, ou le mélange de deux ou de plus de deux composés hydrophiles solubles ou dispersibles dans l'eau, est préparé et la solution est ensuite soumise aux conditions B, dans lesquelles le polymère ou le mélange de deux ou de plus de deux polymères n'est plus soluble et précipite sous forme de polymère particulaire.

10. Procédé selon la revendication 9, **caractérisé en ce que** le passage des conditions A aux conditions B implique au moins une des modifications suivantes :
a) modification du pH
b) modification de la polarité du solvant
c) modification de la température
d) modification de la quantité du solvant.

11. Procédé de préparation d'une composition selon l'une quelconque des revendications 1 à 4, dans lequel une solution d'un composé hydrophile et d'un polymère dans un solvant non miscible à l'eau est émulsifiée dans l'eau en produisant une émulsion et ensuite, le solvant non miscible à l'eau est éliminé de l'émulsion, de sorte qu'il se forme une dispersion d'un polymère particulaire.
